# FASCICULE DE BREVET EUROPEEN

(11) **EP 2 163 065 B1**
(45) Date de publication et mention de la délivrance du brevet: **24.10.2018**
(21) Numéro de dépôt: 08805895.3
(22) Date de dépôt: 30.05.2008
(51) Int. Cl.: H04L 29/08, H04N 21/2381, H04L 29/06, H04N 21/414, H04N 21/61, H04W 36/14, H04W 36/02

(54) **BASCULEMENT DE SESSION AUDIOVISUELLE D'UN PREMIER RÉSEAU D'ACCÈS VERS UN DEUXIÈME RÉSEAU D'ACCÈS**
AUDIOVISUELLES SITZUNGS-HANDOVER VON EINEM ERSTEN ZUGANGSNETZ ZU EINEM ZWEITEN ZUGANGSNETZ
AUDIOVISUAL SESSION HANDOVER FROM A FIRST ACCESS NETWORK TO A SECOND ACCESS NETWORK

(30) Priorité: 01.06.2007 FR 0755420
(43) Date de publication de la demande: 17.03.2010
(73) Titulaire: Orange, 75015 Paris (FR)
(72) Inventeur: BIHANNIC, Nicolas, F-Trebeurden 22560 (FR); LE LANN, Pierre-Yves, F-Lannion 22300 (FR)
(86) Numéro de dépôt international: PCT/FR2008/050952
(87) Numéro de publication internationale: WO 2008/152316

(56) Documents cités:
- EP-A1- 1 610 502
- US-A1- 2006 014 539
- US-A1- 2006 092 879
- US-A1- 2006 092 879

## Description

### 1. Domaine de l'invention

Le domaine de l'invention est celui des réseaux de télécommunications, et plus particulièrement celui de la convergence entre réseaux mobiles et réseaux fixes.

L'invention s'applique notamment à un service de distribution de contenus audiovisuels depuis un serveur de contenus vers un terminal d'utilisateur à travers un réseau de télécommunications.

### 2. Etat de l'art

La généralisation de l'utilisation du protocole IP ("Internet Protocol") dans les réseaux de télécommunications a permis la mise en oeuvre de nouveaux services, que ce soit pour l'Internet, la téléphonie ou pour l'audiovisuel. De tels services sont proposés, sur la base d'architectures dédiées, sur le réseau fixe et sur le réseau mobile.

Il est connu d'adapter la distribution du contenu multimédia aux caractéristiques du terminal d'utilisateur et du réseau d'accès au sein d'un même réseau d'accès, qu'il soit fixe ou mobile. Notamment, l'homme du métier sait faire évoluer dynamiquement la distribution d'un contenu multimédia, lorsque le terminal d'utilisateur change de type de cellule mobile et passe, par exemple, d'une cellule HSDPA ("High Speed Downlink Packet Access") à une cellule EDGE ("Enhanced Data rates for GSM Evolution"), la cellule EDGE offrant un débit inférieur à la cellule HSDPA, typiquement 50 kbps au lieu de 250 kbps. Pour ce faire, il met en oeuvre un mécanisme basé sur une analyse de rapports RTCP ("Real-Time Transport Control Protocol") transmis par le terminal d'utilisateur au serveur de contenus par voie de retour RTP ("Real-Time Transport Protocol"). Dans le cas où une succession de rapports erronés est réceptionné, le serveur déclenche la distribution du même contenu avec un niveau de qualité inférieur. On note toutefois que cette adaptation se fait au sein d'un même réseau mobile.

### 3. Inconvénients de l'art antérieur

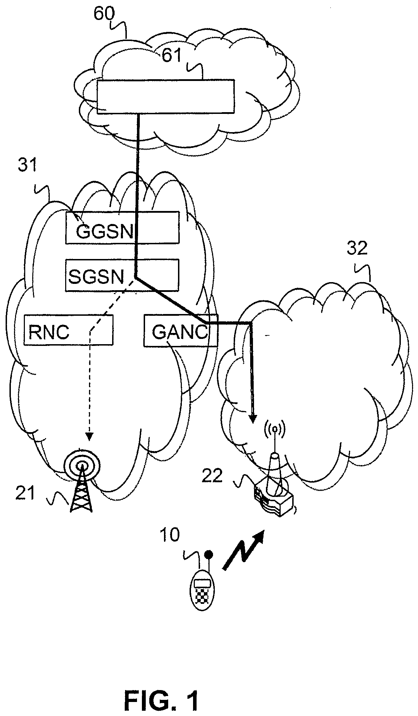

La multiplication des services et des architectures dédiées sur IP pose le problème d'une convergence réseau fixe - réseau mobile. A ce sujet, l'organisme de normalisation des réseaux mobiles 3GPP ("3rd Generation Partnership Project") propose actuellement deux solutions techniques permettant la convergence des architectures fixe et mobiles:
- la première solution, basée sur le protocole GAN ("Generic Access Network") supporte la mobilité d'un terminal d'utilisateur entre un réseau fixe et un réseau mobile de type GSM ("Global Systems for Mobile Communications") pour les services conversationnels et GPRS ("General Packet Radio Service") pour les services liés au transport de données en mode paquets. En référence à la figure 1, on présente un réseau de télécommunications 1, comprenant un premier réseau d'accès mobile 31, un deuxième réseau d'accès fixe 32 et une plateforme de services 60 comprenant un serveur de contenus 61. On considère un terminal d'utilisateur 10 attaché au réseau d'accès mobile 31 par l'intermédiaire d'un point d'accès, du type station de base 21. Ce terminal est en train de visualiser un contenu audiovisuel transmis au cours d'une session audiovisuelle qu'il a établie avec le serveur de contenus 61. Le flux de données constitutif du contenu audiovisuel encodé lui est transmis par l'intermédiaire du réseau d'accès mobile 31 et, plus précisément, via une passerelle d'entrée dans le réseau d'accès mobile de type GGSN ("Gateway GPRS Support Node"), un équipement SGSN ("Serving GPRS Support Node") en charge de vérifier les droits d'un utilisateur au service demandé et d'allouer de bout en bout les ressources nécessaires à la mise en oeuvre de ce service, et un contrôleur RNC ("Radio Network Controller") en charge de contrôler la mobilité du terminal d'utilisateur d'une station de base à une autre et de vérifier que les ressources nécessaires à la mise en oeuvre du service sont disponible sur le lien entre le RNC, la station de base et le terminal d'utilisateur. Lorsque le terminal d'utilisateur entre dans la zone de couverture du réseau d'accès fixe 32, il s'attache à un point d'accès radio relié à une passerelle domestique 22 vers le réseau d'accès fixe 32. Selon l'art antérieur, le basculement de la
- session audiovisuelle est réalisé par un contrôleur GAN-C, situé dans le réseau d'accès mobile, en aval du GGSN et qui dispose de moyens pour acheminer le flux de données vers le réseau d'accès fixe. Elle s'appuie sur un équipement de contrôle, appelé GAN-C, qui comprend des moyens pour faire basculer un flux de données d'une première interface avec le réseau mobile vers une deuxième interface vers le réseau fixe. Un inconvénient de cette solution technique est que l'équipement de contrôle GAN-C est connecté au SGSN par un lien qui dispose d'une bande passante limitée pour assurer le transport de flux de données en mode paquets en temps réel (streaming). En particulier, cette solution permet au mieux au terminal d'utilisateur de continuer à recevoir, par l'intermédiaire du réseau d'accès fixe, le contenu audiovisuel qu'il était en train de recevoir sur le réseau d'accès mobile, mais en aucun cas, elle ne lui permet pas de profiter de la bande passante élargie offerte par le réseau d'accès fixe. Un autre inconvénient de cette technique est qu'elle monopolise une partie des ressources du réseau mobile pour transmettre un flux de données vers le réseau d'accès fixe (du GGSN jusque le GANC).
- la deuxième solution technique, appelée I-WLAN (3GPP-Wireless Local Area Network Interworking), est plus adaptée au transport de données. Elle permet à un opérateur mobile d'offrir à ses abonnés un service de transport de données depuis un réseau d'accès fixe. Elle dispose aujourd'hui de moyens pour assurer la mobilité de services conversationnels du réseau GSM vers un réseau fixe en mode paquets, à l'aide de la spécification Voice Call Continuity (VCC). Toutefois, elle n'offre aujourd'hui aucune solution pour la mobilité de services de distribution de contenus audiovisuels.

La demande de brevet US 2006/092879 A1 décrit un procédé de gestion de la QoS lors d'un basculement d'un premier réseau d'accès vers un second réseau d'accès. Le procédé permet la réservation de ressources sur le réseau de destination de façon à garantir une qualité de service lors du basculement. Malgré l'intérêt de cette solution, les problématiques spécifiques aux sessions multimédia ne sont pas adressées. Cette solution ne permet pas l'adaptation de la qualité d'un contenu audiovisuel en cours de distribution en fonction de caractéristiques du réseau d'accès. En particulier, elle ne garantit pas une bascule de la session audiovisuelle du premier réseau d'accès vers le second réseau d'accès sans interruption de la distribution, et ne permet pas non plus de tirer parti des caractéristiques du second réseau pour améliorer la qualité du contenu audiovisuel.

### 4. Exposé de l'invention

L'invention est décrite dans les revendications 1 à 17.

Il existe donc un besoin de proposer une solution pour assurer la mobilité de services liés au transport de données en mode paquets, qui permette d'adapter la qualité du contenu audiovisuel transporté à des caractéristiques du réseau d'accès, en particulier en termes de bande passante.

La présente invention répond à ce besoin en proposant un procédé de basculement d'une session audiovisuelle dans un réseau de télécommunications comprenant au moins un premier réseau d'accès et un deuxième réseau d'accès, une session audiovisuelle étant en cours, pendant laquelle au moins un terminal d'utilisateur attaché audit premier réseau d'accès et apte à s'attacher audit deuxième réseau d'accès, reçoit d'un serveur de contenus au moins un flux de données constitutif d'un contenu audiovisuel par l'intermédiaire d'une passerelle de flux de données comprenant une première interface vers ledit premier réseau d'accès et une deuxième interface de sortie vers ledit deuxième réseau d'accès.

Le procédé selon l'invention est particulier en ce que, lorsque le terminal s'est attaché audit deuxième réseau d'accès, ledit procédé comprend les étapes suivantes de :
- réception d'une requête de basculement de session vers le deuxième réseau d'accès, ladite requête de basculement ayant été émise suite à un changement d'un état d'attachement dudit terminal audit deuxième réseau;
- commande de basculement de ladite session audiovisuelle à ladite passerelle de flux de données de la première interface de sortie à la deuxième interface de sortie;
- récupération d'informations liées à un contexte de ladite session audiovisuelle basculée sur la deuxième interface;
- commande d'évaluation à un serveur de profils de contenus d'une adaptation de qualité du contenu audiovisuel transmis pouvant être supportée par ladite deuxième interface pour ladite session audiovisuelle en fonction desdites informations récupérées; et
- réception d'une réponse de la part dudit serveur de profils de contenus et demande de mise à jour dudit flux de données émis lors de ladite session audiovisuelle au serveur de contenus afin d'assurer ladite adaptation de qualité évaluée.

Ainsi, l'invention repose sur une approche tout à fait nouvelle et inventive de la gestion d'une session audiovisuelle en cours, lorsque le terminal d'utilisateur est en situation de mobilité d'un premier vers un deuxième réseau d'accès. En effet, cette approche se décompose en deux phases :
- une première phase consacrée au basculement de la session audiovisuelle, au cours de laquelle on aiguille le ou les flux de données transmis de telle sorte qu'ils parviennent au terminal d'utilisateur par l'intermédiaire du deuxième réseau d'accès auquel il s'est attaché. Cette phase est déclenchée par la détection d'un changement d'un état d'attachement du terminal d'utilisateur par rapport aux premier et deuxième réseaux d'accès. On entend par changement d'état d'attachement, l'attachement du terminal d'utilisateur au deuxième réseau d'accès ou encore, s'il était déjà attaché à ce deuxième réseau, une dégradation des conditions d'attachement au premier réseau. La détection d'un tel changement d'état entraîne alors l'envoi d'une requête de basculement de session et la mise en oeuvre du procédé selon l'invention par un contrôleur de passerelle en charge de contrôler la passerelle de flux de données placée en coupure du trajet emprunté par les flux de données entre le serveur de contenus distributeur de ces flux et le terminal d'utilisateur bénéficiaire du service. La passerelle met ensuite simplement en oeuvre le basculement en connectant la deuxième interface et en déconnectant la première interface.
- une deuxième phase, dite phase d'adaptation, au cours de laquelle le contrôleur de passerelle récupère des informations liées au contexte de la session audiovisuelle au sein du deuxième réseau d'accès, grâce auxquelles il fait évaluer quelle adaptation de qualité du contenu audiovisuel en cours de transmission pourrait être supportée par la deuxième interface à partir de ces informations et on met en oeuvre l'adaptation de qualité évaluée comme pouvant être supportée.

L'invention permet ainsi de résoudre le problème technique de faire évoluer la qualité d'une session audiovisuelle dans un contexte de mobilité du terminal d'utilisateur, en fonction des ressources disponibles au sein du réseau d'accès concerné.

Selon un aspect avantageux de l'invention, ledit procédé comprend, préalablement à l'étape de commande de basculement, les étapes suivantes:
- envoi audit terminal d'utilisateur d'une commande d'établissement de connexion à ladite deuxième interface, ladite commande comprenant des informations nécessaires à ladite connexion;
- envoi à la passerelle de flux de données d'une notification d'envoi de commande de connexion au terminal, comprenant des informations relatives à ladite session et audit terminal;

Selon cet aspect de l'invention, le basculement du ou des flux de données de la session audiovisuelle n'a effectivement lieu que lorsque le terminal d'utilisateur est bien connecté à la deuxième interface. De même, la passerelle informe le contrôleur, lorsque le basculement est effectif. Un avantage est d'éviter toute interruption de la transmission du contenu audiovisuel.

Selon un autre aspect de l'invention, le procédé de basculement comprend, suite à l'étape de commande de basculement et préalablement à l'étape de demande de mise à jour dudit flux de données, une étape de réception d'une notification de la part de ladite passerelle indiquant que le basculement dudit flux de données a été effectué.

Un avantage est de ne mettre en oeuvre l'adaptation de la session audiovisuelle qu'une fois que le basculement de la première vers la deuxième interface est effectif. Selon un autre aspect de l'invention, lesdites informations de contexte récupérées comprennent au moins une information parmi les informations suivantes :
- une information relative à un profil dudit utilisateur;
- une information relative à des ressources de la connexion établie entre ladite deuxième interface et le terminal d'utilisateur lorsque ce dernier est attaché au deuxième réseau d'accès;
- une information relative à des ressources réseau entre ledit serveur de contenus et ladite passerelle;
- une information relative à des capacités dudit terminal d'utilisateur; et
- une information relative à des caractéristiques d'encodage du contenu audiovisuel par le serveur de contenus.

Les informations relatives à un profil de l'utilisateur renseignent sur un type d'abonnement auquel a souscrit ledit utilisateur. Elles permettent de vérifier que ledit utilisateur a bien acquis le droit de recevoir un contenu audiovisuel avec une qualité améliorée.

Les informations relatives à des ressources de la connexion établie entre la deuxième interface et le terminal d'utilisateur concernent notamment la bande passante disponible sur cette connexion. Cette bande passante peut être une valeur statique minimale fixée a priori ou une valeur dynamique mesurée en temps réel sur ladite connexion.

Une information relative à des ressources sur un lien emprunté par le ou les flux de données entre ledit serveur de contenus et ladite passerelle est par exemple une valeur de bande passante, statique ou dynamique, pour ledit lien.

Une information relative à des capacités dudit terminal d'utilisateur est, par exemple, une capacité mémoire ou des caractéristiques d'un processeur dudit terminal.

Une information relative à des caractéristiques d'encodage du contenu audiovisuel par le serveur de contenus renseigne, par exemple sur un débit d'un flux de données constitutif du contenu audiovisuel.

De telles informations sont avantageusement exploitées par le serveur de profils de contenus pour déterminer si une adaptation de la qualité du contenu audiovisuel encodé transmis au terminal d'utilisateur au cours de la session audiovisuel peut être améliorée.

Selon un autre aspect de l'invention, le contenu audiovisuel est encodé sous la forme d'une pluralité de flux de données échelonnés, comprenant un flux de base et au moins un flux de rehaussement et la réponse dudit serveur de profil de contenus indique un nombre de flux de rehaussement à activer.

En effet, un encodage échelonné, en produisant un flux de base et au moins un flux de rehaussement, permet de réaliser des décodages conduisant à une qualité qui augmente avec le nombre de flux décodés. Plus précisément, le flux dit de base conduit à un contenu audiovisuel décodé présentant une qualité de base. Si on y ajoute le décodage d'un flux de rehaussement, on obtient un contenu audiovisuel décodé de qualité améliorée. Un deuxième flux de rehaussement permet d'améliorer encore la qualité du contenu audiovisuel décodé etc.

Selon cet aspect de l'invention, l'adaptation de qualité qui peut être supportée par la session est traduite par le serveur de profil de contenus en un nombre de flux de rehaussement dont la transmission doit être activée. Par exemple, en supposant que le serveur de contenus a encodé le contenu audiovisuel sous la forme d'un flux de base à 2Mbits/s, d'un premier flux de rehaussement à 2Mbits/s et d'un deuxième flux de rehaussement à 1,5 Mbits/s, alors, si la deuxième interface offre un débit supplémentaire de 2 Mbits/s, le serveur de profil de contenus peut décider d'activer la transmission du premier flux de rehaussement pour la session audiovisuelle en cours.

Un premier avantage lié à l'utilisation de flux échelonnés est d'optimiser les capacités de stockage des flux au niveau du serveur de contenus, en évitant de stocker autant de flux de données que de débits ou de taille d'image requis par le service de distribution de contenus.

Un deuxième avantage est de simplifier la mise en oeuvre de l'adaptation de qualité au niveau de la passerelle de flux de données, en particulier pour éviter les interruptions de transmissions. On comprend en effet qu'avec des flux échelonnés, l'adaptation de qualité suite à une augmentation de débit disponible est simplement mise en oeuvre en transmettant un flux de données supplémentaires, sans modifier la transmission en cours du flux de base. Il est donc plus simple d'éviter toute interruption de visualisation au niveau du terminal d'utilisateur.

Selon un autre aspect de l'invention, lorsque la réponse dudit serveur de profil de contenu comprend une indication d'activation d'au moins un flux de rehaussement, ledit procédé comprend les étapes suivantes :
- commande d'émission dudit au moins flux de rehaussement au serveur de contenus,
- réception d'une notification par la passerelle de la réception dudit au moins un flux de rehaussement sur son interface d'entrée,
- envoi au terminal d'utilisateur d'une commande d'établissement de connexion supplémentaire à ladite deuxième interface de ladite passerelle, ladite commande comprenant des informations relatives à ladite connexion supplémentaire;

- envoi à la passerelle d'une notification indiquant que ledit au moins un flux de rehaussement reçu est destiné à être transmis par l'intermédiaire de ladite connexion supplémentaire; et
- réception d'une confirmation d'établissement de la connexion supplémentaire et de transmission dudit au moins un flux de rehaussement.
Selon cet aspect de l'invention, le contrôleur ne demande au terminal d'établir une nouvelle connexion avec la deuxième interface de la passerelle de flux de données, qu'après avoir reçu de la part de la passerelle une confirmation de réception d'une partie du flux de rehaussement. Le contrôleur fournit également à la passerelle les informations nécessaires à l'établissement de cette connexion avec le terminal d'utilisateur. La passerelle connaît donc à l'avance la destination du flux de rehaussement qu'elle a commencé à recevoir et elle attend que la connexion avec le terminal d'utilisateur soit établie pour déclencher la transmission effective de ce flux de rehaussement vers le terminal d'utilisateur.

Un avantage est de garantir que la transmission du flux de rehaussement se fait dans de bonnes conditions.

Selon un autre aspect de l'invention, le procédé de basculement comprend une étape de sauvegarde d'informations de contexte relatives aux connexions établies entre ledit terminal d'utilisateur et ladite passerelle de flux de données pour ladite session audiovisuelle pendant une durée prédéterminée.

Cette étape de sauvegarde trouve son intérêt, notamment dans l'exemple suivant. On considère un terminal d'utilisateur en situation de mobilité d'un premier réseau d'accès mobile vers un deuxième réseau d'accès fixe, par exemple un accès sans fil à une passerelle domestique connectée au réseau IP. En supposant que le réseau d'accès fixe offre des conditions favorables à une amélioration de la qualité de la session audiovisuelle en cours, par exemple, une bande passante plus élevée que le réseau d'accès mobile, la mise en oeuvre du procédé selon l'invention permet, non seulement le basculement de la session audiovisuelle du premier réseau mobile vers le deuxième réseau fixe sans interruption de transmission, mais aussi une adaptation de la qualité de la session réalisée en transmettant au terminal au moins un flux de rehaussement en plus du flux de base qu'il recevait lorsqu'il était attaché au premier réseau d'accès. On se place dans le cas où l'utilisateur quitte la maison et s'attache de nouveau à un réseau d'accès mobile, par exemple, au premier réseau d'accès. Le procédé selon l'invention est mis en oeuvre une nouvelle fois. L'utilisateur, qui ne reçoit plus que le flux de base, se rend compte que la qualité du contenu audiovisuel s'est beaucoup dégradée depuis qu'il a quitté son domicile et il décide de retourner à la maison le temps que la session audiovisuelle se termine.

Cet aspect de l'invention permet donc de restituer très rapidement au terminal d'utilisateur le contexte qui avait été établi dans le deuxième réseau d'accès et donc de lui permettre de retrouver très rapidement la qualité de transmission améliorée dont il bénéficiait à son domicile, par exemple.

La sauvegarde n'est assurée que pendant une durée prédéterminée, correspondant à un laps de temps au-delà duquel il peut être considéré que l'utilisateur en situation de mobilité s'est suffisamment éloigné du deuxième réseau d'accès pour ne pas y revenir. La mémoire est ensuite libérée.

Selon un autre aspect de l'invention, lorsqu'une connexion supplémentaire a été établie avec la première interface de ladite passerelle pour transmettre un flux de rehaussement, ledit procédé comprend, suite à l'étape de réception d'une requête de basculement de la session vers ledit deuxième réseau d'accès, une étape de déconnexion de ladite connexion supplémentaire.

On rappelle l'hypothèse sous-jacente selon laquelle le premier et le second réseau d'accès ont des ressources suffisantes pour assurer une transmission en temps réel du flux de base du contenu audiovisuel. Selon cet aspect de l'invention, avant toute opération de basculement du premier vers le deuxième réseau d'accès, la transmission du contenu audiovisuel lors de la session audiovisuelle en cours est réduite au flux de base. Ceci permet de garantir que la première phase de basculement se fera dans de bonnes conditions, sans interruption. S'il est établi lors de la deuxième phase d'adaptation que le deuxième réseau d'accès a les ressources pour supporter la transmission en temps réel du flux de rehaussement, une connexion supplémentaire avec la deuxième interface sera établie pour mettre en oeuvre la transmission de ce flux de rehaussement.

L'invention concerne également un contrôleur de passerelle de flux de données audiovisuelles dans un réseau de télécommunications comprenant un premier réseau d'accès, un second réseau d'accès et une passerelle de flux de données comprenant une interface d'entrée apte à recevoir des flux de données et une première et une deuxième interfaces de sortie aptes à transmettre lesdits flux respectivement vers le premier et le deuxième réseau d'accès, une session audiovisuelle étant en cours pendant laquelle un terminal d'utilisateur attaché audit premier réseau d'accès et apte à s'attacher audit deuxième réseau d'accès, reçoit d'un serveur de contenus au moins un flux de données constitutif d'un contenu audiovisuel par l'intermédiaire de ladite première interface.

Selon l'invention, un tel contrôleur est caractérisé en ce qu'il comprend des moyens de :
- réception d'une requête de basculement de ladite session audiovisuelle vers le deuxième réseau d'accès émise suite un changement d'un état d'attachement dudit terminal d'utilisateur auxdits premier et deuxième réseaux d'accès;
- envoi à ladite passerelle d'une commande de basculement de ladite session audiovisuelle de ladite première interface vers ladite deuxième interface;
- récupération d'informations liées à un contexte de ladite session audiovisuelle basculée sur la deuxième interface;
- commande d'évaluation d'une adaptation de qualité de ladite session audiovisuelle pouvant être supportée par ladite deuxième interface en fonction desdites informations récupérées; et
- demande de mise à jour de la session audiovisuelle auprès dudit serveur de contenus permettant d'assurer ladite adaptation de qualité supportée.

L'invention concerne également une passerelle de flux de données dans un réseau de télécommunications comprenant au moins un premier réseau d'accès et un deuxième réseau d'accès, ladite passerelle comprenant une interface d'entrée apte à recevoir au moins un flux de données émis par un serveur de contenus et des première et deuxième interfaces de sortie aptes à transmettre ledit au moins un flux de données reçu respectivement vers lesdits premier et deuxième réseau d'accès, une session audiovisuelle étant en cours pendant laquelle au moins un terminal d'utilisateur attaché audit premier réseau d'accès et apte à s'attacher audit deuxième réseau d'accès, reçoit au moins un flux de données constitutif d'un contenu audiovisuel encodé par l'intermédiaire de ladite première interface de sortie.

Selon l'invention, ladite passerelle est caractérisée en ce qu'elle comprend :
- des moyens de réception d'une commande de basculement de ladite session audiovisuelle de la première vers la deuxième interface, émise suite à un changement d'un état d'attachement dudit terminal d'utilisateur auxdits premier et deuxième réseaux d'accès;
- des moyens de basculement du contenu audiovisuel de la première interface vers la deuxième interface en cours de transmission;
- des moyens de réception d'une notification d'adaptation de qualité de ladite session audiovisuelle par ledit serveur de contenus; et
- des moyens de mise à jour de ladite deuxième interface de sortie aptes à mettre en oeuvre ladite adaptation de qualité.

Selon un aspect avantageux de l'invention, la passerelle est apte à mettre en oeuvre lesdits moyens de basculement après réception de ladite notification et elle est apte à mettre en oeuvre des moyens d'envoi d'une confirmation de basculement audit contrôleur, une fois ladite connexion établie avec le terminal.

Un avantage est d'une part de n'effectuer le basculement qu'une fois la nouvelle connexion avec la deuxième interface établie et d'informer le contrôleur de passerelle qu'il peut lancer la phase d'adaptation une fois que les flux de données transitent effectivement par la deuxième interface.

Selon un autre aspect de l'invention, le contenu audiovisuel est encodé sous la forme d'une pluralité de flux de données échelonnés, comprenant au moins un flux de données de base et au moins un flux de rehaussement et la notification de mise à jour indique un nombre de flux de données de rehaussement dont la transmission doit être activée. Selon ce même aspect de l'invention, les moyens de mise à jour de la deuxième interface comprennent des moyens d'établissement d'au moins une connexion supplémentaire avec ledit terminal d'utilisateur pour acheminer ledit au moins un flux de rehaussement et la passerelle comprend des moyens d'envoi d'une confirmation de mise à jour de ladite session audit contrôleur, une fois ladite connexion supplémentaire établie.

Ainsi, la passerelle selon l'invention permet d'établir avec le terminal d'utilisateur autant de connexions avec la deuxième interface que de flux de rehaussement nécessaires à l'adaptation de qualité de la session audiovisuelle en cours.

Selon un autre aspect avantageux de l'invention, la passerelle de flux de données est positionnée de telle sorte que la première interface est connectée à une première passerelle d'entrée au premier réseau d'accès et la deuxième interface est connectée à une deuxième passerelle d'entrée au deuxième réseau d'accès.

La passerelle de flux de données selon l'invention comprend donc une interface physique directe avec chacun des deux réseaux d'accès. Un avantage de positionner la passerelle de flux de données à la frontière du premier et du deuxième réseaux d'accès est d'éviter que les flux de données acheminés au terminal d'utilisateur via le deuxième réseau d'accès ne traversent le premier réseau d'accès et vice versa. Le trajet des flux de données vers le terminal d'utilisateur, que ce soit à travers le premier ou le deuxième réseau d'accès, s'en trouve optimisé. Un autre avantage est de ne pas continuer à monopoliser les ressources du premier réseau d'accès pour transmettre les flux de données vers le terminal d'utilisateur, lorsque la session audiovisuelle est basculée sur le deuxième réseau d'accès. En effet, les ressources du premier réseau d'accès peuvent être libérées dès le basculement de la session audiovisuelle sur le deuxième réseau d'accès.

L'invention concerne aussi un terminal d'utilisateur dans un réseau de télécommunications comprenant un premier et un deuxième réseaux d'accès et une passerelle de flux de données comprenant une interface d'entrée apte à recevoir des flux de données et une première et une deuxième interfaces de sortie aptes à transmettre lesdits flux respectivement vers le premier et le deuxième réseau d'accès, une session audiovisuelle étant en cours, pendant laquelle ledit terminal, attaché audit premier réseau d'accès et apte à s'attacher audit deuxième réseau d'accès, reçoit au moins un flux de données constitutif d'un contenu audiovisuel par l'intermédiaire d'une première connexion à ladite première interface de sortie, caractérisé en ce que ledit terminal est apte à mettre en oeuvre, lorsqu'il s'est attaché audit deuxième réseau d'accès :
- des moyens de réception d'une commande d'établissement d'une deuxième connexion à ladite deuxième interface, destinée à permettre un basculement dudit au moins un flux de données de la première vers la deuxième interface, ladite commande comprenant des informations nécessaires à ladite connexion;
- des moyens d'établissement de ladite deuxième connexion à la deuxième interface à l'aide desdites informations;
- des moyens de réception d'instructions relatives à une adaptation de la qualité de la session audiovisuelle en cours sur la deuxième interface; et
- des moyens d'adaptation de la qualité de la session audiovisuelle en cours.

Selon un aspect avantageux de l'invention, le contenu audiovisuel est encodé sous la forme d'une pluralité de flux de données échelonnés, comprenant au moins un flux de base et un flux de rehaussement, lesdites instructions relatives à une adaptation de la qualité de la session audiovisuelle en cours comprennent au moins une commande de connexion supplémentaire à ladite deuxième interface de ladite passerelle, ladite au moins une connexion supplémentaire étant destinée à transmettre au moins un flux de rehaussement, et lesdits moyens d'adaptation de la qualité de la session audiovisuelle sont aptes à déclencher des moyens d'établissement de ladite au moins une connexion supplémentaire à ladite deuxième interface de ladite passerelle.

L'invention concerne en outre un réseau de télécommunications comprenant au moins un premier réseau d'accès, un deuxième réseau d'accès, une passerelle de flux de données comprenant une interface d'entrée apte à recevoir des flux de données et une première et une deuxième interfaces de sortie aptes à transmettre les flux reçus respectivement vers le premier et le deuxième réseaux d'accès et un contrôleur de passerelle apte à contrôler ladite passerelle, une session audiovisuelle étant en cours, pendant laquelle ledit terminal, attaché audit premier réseau d'accès et apte à s'attacher au deuxième réseau d'accès, reçoit au moins un flux de données constitutif d'un contenu audiovisuel par l'intermédiaire d'une première connexion à ladite première interface de sortie de ladite passerelle, ledit réseau est caractérisé en ce que ledit contrôleur de passerelle comprend des moyens de :
- réception d'une requête de basculement de ladite session audiovisuelle vers le deuxième réseau d'accès, émise suite à un changement d'un état d'attachement dudit terminal d'utilisateur auxdits premier et deuxième réseaux d'accès;
- envoi à ladite passerelle d'une commande de basculement de ladite session audiovisuelle de ladite première interface vers ladite deuxième interface;
- récupération d'informations liées à un contexte de ladite session audiovisuelle basculée sur la deuxième interface;
- commande d'évaluation d'une adaptation de qualité de ladite session audiovisuelle pouvant être supportée par ladite deuxième interface en fonction desdites informations récupérées; et
- demande de mise à jour de la session audiovisuelle auprès dudit serveur de contenus permettant d'assurer ladite adaptation de qualité supportée.

L'invention concerne en outre un serveur de profil de contenus dans un réseau de télécommunications comprenant au moins un premier réseau d'accès, un deuxième réseau d'accès, une passerelle de flux de données comprenant une première et une deuxième interfaces de sortie aptes à faire transiter des flux de données respectivement vers les premier et deuxième réseaux d'accès et un contrôleur de passerelle apte à contrôler ladite passerelle, une session audiovisuelle étant en cours pendant laquelle au moins un terminal d'utilisateur attaché audit premier réseau d'accès et apte à s'attacher au deuxième réseau d'accès, reçoit d'un serveur de contenus au moins un flux de données constitutif d'un contenu audiovisuel encodé par l'intermédiaire de ladite première interface de sortie , ledit serveur de profil de contenus étant caractérisé en ce que,
ledit contrôleur de passerelle comprenant des moyens de :
- réception d'une requête de basculement de session vers le deuxième réseau d'accès, ladite requête de basculement ayant été émise suite à un changement d'un état d'attachement dudit terminal audit deuxième réseau;
- envoi à ladite passerelle d'une commande de basculement de ladite session audiovisuelle de ladite première interface vers ladite deuxième interface;
- récupération d'informations liées à un contexte de ladite session audiovisuelle basculée sur la deuxième interface;
- commande d'évaluation d'une adaptation de qualité de ladite session audiovisuelle pouvant être supportée par ladite deuxième interface en fonction desdites informations récupérées audit serveur de profil de contenus; et
- demande de mise à jour de la session audiovisuelle auprès dudit serveur de contenu permettant d'assurer ladite adaptation de qualité supportée,
ledit serveur de profil de contenus comprend des moyens d'évaluation d'une adaptation de qualité du contenu audiovisuel transmis pouvant être supportée par ladite session audiovisuelle en fonction desdites informations récupérées en réponse à ladite commande d'évaluation et des moyens d'envoi d'une réponse audit contrôleur.

L'invention concerne aussi un serveur de mobilité dans un réseau de télécommunications, comprenant au moins un premier réseau d'accès, un deuxième réseau d'accès, une passerelle de flux de données comprenant une première et une deuxième interfaces de sortie aptes à faire transiter des flux de données respectivement vers les premier et deuxième réseaux d'accès et un contrôleur de passerelle apte à contrôler ladite passerelle, une session audiovisuelle étant en cours pendant laquelle au moins un terminal d'utilisateur attaché audit premier réseau d'accès et apte à s'attacher audit deuxième réseau d'accès, reçoit d'un serveur de contenus au moins un flux de données constitutif d'un contenu audiovisuel encodé par l'intermédiaire de ladite première interface de sortie, caractérisé en ce que ledit serveur de mobilité est apte à mettre en oeuvre les moyens suivants de :
- réception d'une notification de changement d'un état d'attachement dudit terminal d'utilisateur auxdits premier et deuxième réseaux d'accès, ladite notification comprenant au moins une localisation dudit terminal d'utilisateur et une identification de la session audiovisuelle;
- analyse de ladite notification de changement destinée à déterminer si la session audiovisuelle en cours doit être basculée du premier réseau d'accès vers le deuxième réseau d'accès;
- identification dudit contrôleur de passerelle en charge de contrôler ladite session à partir des informations de localisation et de localisation;
- envoi d'une requête de basculement de session du premier réseau d'accès vers le deuxième réseau d'accès audit contrôleur de passerelle.

L'invention concerne enfin un produit programme d'ordinateur téléchargeable depuis un réseau de communication et/ou stocké sur un support lisible par ordinateur et/ou exécutable par un microprocesseur, caractérisé en ce qu'il comprend des instructions de code de programme pour l'exécution du procédé selon l'invention.

### 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un exemple de réseau de télécommunication mettant en oeuvre un procédé de basculement de session audiovisuelle d'un réseau d'accès mobile vers un réseau d'accès fixe selon l'art antérieur;
- la figure 2 présente de façon schématique un exemple de réseau de télécommunication mettant en oeuvre un procédé de basculement de session audiovisuelle selon l'invention;
- la figure 3 présente un diagramme séquentiel d'une première phase de basculement mise en oeuvre par le procédé de basculement de session audiovisuelle selon l'invention, lorsque le premier réseau d'accès est un réseau d'accès mobile et un deuxième réseau d'accès est un réseau d'accès fixe;
- la figure 4 présente un diagramme séquentiel d'une deuxième phase d'adaptation d'une session audiovisuelle mise en oeuvre par le procédé de basculement de session audiovisuelle selon l'invention, lorsque le premier réseau d'accès est un réseau d'accès mobile et le deuxième réseau d'accès est un réseau d'accès fixe;
- la figure 5 présente un diagramme séquentiel d'une première phase de basculement mise en oeuvre par le procédé de basculement de session audiovisuelle selon l'invention, lorsque le premier réseau d'accès est un réseau d'accès fixe et un deuxième réseau d'accès est un réseau d'accès mobile.

### 6. Description d'un mode de réalisation particulier de l'invention

Le principe général de l'invention repose sur la mise en oeuvre d'un basculement d'une session audiovisuelle en deux phases :
- une phase de basculement proprement dit du flux de données transmis d'une première interface vers le premier réseau d'accès sur une deuxième interface vers le deuxième réseau d'accès;
- une phase d'adaptation de la qualité de la session audiovisuelle en fonction d'informations liées au nouveau contexte de la session dans le deuxième réseau d'accès.

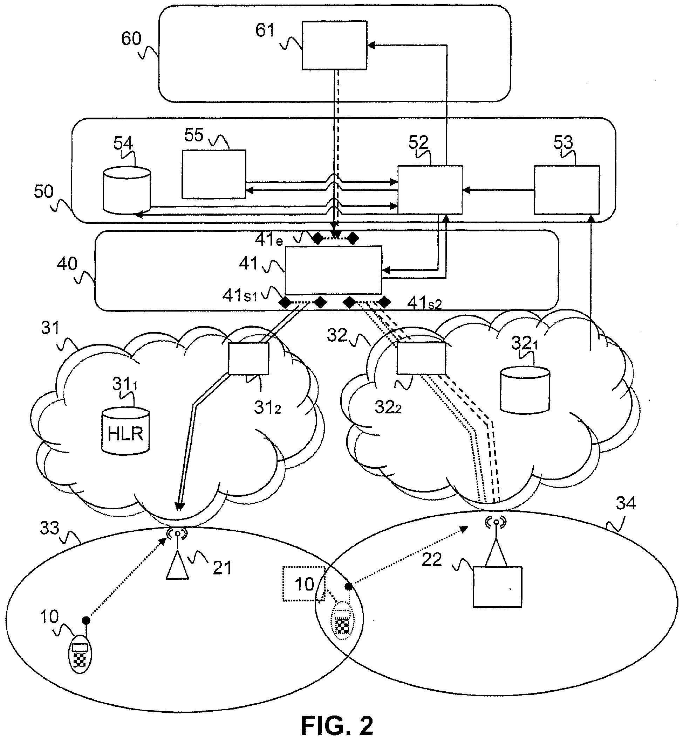

En référence à la figure 2, on présente un réseau de télécommunications 1 comprenant un premier réseau d'accès 31, par exemple un réseau d'accès mobile, équipé de points d'accès radio de type station de base 21 et un deuxième réseau d'accès 32, par exemple un réseau d'accès fixe, équipé de points d'accès radio de type Wifi reliés à une passerelle domestique 22. On considère un terminal d'utilisateur 10 comprenant des premiers moyens pour s'attacher au premier réseau d'accès 31 lorsqu'il entre dans la zone de couverture 33 de ce premier réseau et des deuxièmes moyens pour s'attacher au deuxième réseau d'accès 32 lorsqu'il entre dans la zone de couverture 34 de ce deuxième réseau.
Pour les besoins de l'invention, on fait l'hypothèse d'un recouvrement des zones de couverture 33, 34.

Le réseau de télécommunication 1 est contrôlé par un opérateur en télécommunications qui est également fournisseur d'un service de distribution de contenus audiovisuels. Un tel service est, par exemple, un service de streaming de contenus audiovisuels. On rappelle que le "streaming" ou "point à point" est un mécanisme permettant de transporter un flux de données d'une source vers une destination de manière continue, le flux étant traité au fil de l'eau par cette dernière sans qu'elle ait besoin de le stocker dans son intégralité.

Ce service de distribution de contenus audiovisuels est mis en oeuvre par une plateforme de service 60 comprenant un serveur de contenus 61, lequel stocke les contenus audiovisuels encodés sous la forme d'un ou plusieurs flux de données et les distribue aux terminaux d'utilisateurs 10 abonnés au service.

Le réseau de télécommunications 1 comprend également un système de contrôle applicatif 50, comprenant un serveur de mobilité 51, un contrôleur de passerelle de flux de données 52 et un serveur de profils de contenus 55. Un tel système assure le contrôle des sessions multimédia impliquant les terminaux d'utilisateurs, tels qu'une session de voix sur IP ou une session de streaming d'un contenu audiovisuel. Il peut être organisé selon une architecture de type IMS (IP Multimedia Subsystem), qui s'intègre dans l'infrastructure de réseau coeur pour le contrôle des sessions multimédia de l'utilisateur tels que les services temps-réel (comme la voix et vidéo sur protocole IP). Le support de l'IMS est aussi en cours de spécification pour le support des services audiovisuels au sein des organismes comme TISPAN ("Telecoms & Internet Converged Services & Protocols for Advanced Networks") à l'IETF ("Internet Engineering Task Force") ou encore à l'ITU ("International Télécommunication Union") dans IPTV ("Internet Protocol Television") Focus Group. On notera toutefois que l'invention n'est pas limitée à ce type d'architecture de système de contrôle applicatif.

On considère que le terminal d'utilisateur 10 est attaché au premier réseau d'accès 31 et qu'il a demandé à visualiser un contenu audiovisuel disponible dans le cadre du service de distribution de contenus fourni par la plateforme de service 60. Une session audiovisuelle est en cours sur le terminal 10, pendant laquelle il reçoit un contenu audiovisuel sous la forme d'au moins un flux de données. Ce flux de données est acheminé jusqu'au terminal d'utilisateur 10 par l'intermédiaire d'une passerelle de flux de données 41. Cette passerelle est située dans un plan de transfert 40 du réseau de télécommunication 1 entre le serveur de contenus 61 et le terminal d'utilisateur 10. En d'autres termes, elle est placée en coupure des flux de données échangés entre le serveur de contenus 61 et le terminal d'utilisateur 10. Elle comprend une interface d'entrée 41ₑ par laquelle transitent les flux de données émis par le serveur de contenus 61 à destination des terminaux d'utilisateurs abonnés au service, ainsi qu'une première et une deuxième interfaces de sortie 41ₛ₁, 41ₛ₂ permettant d'acheminer les flux de données vers le premier et deuxième réseaux d'accès respectivement.

On entend ici par interface de la passerelle un élément permettant de la relier au terminal d'utilisateur 10. Une telle interface est physiquement constituée par :
- une carte matérielle permettant une interconnexion avec d'autres équipements ou ressources réseau;
- un ensemble de programmes associés gérant les échanges et le transfert d'information entre la passerelle et les autres équipements ou ressources réseau.

De façon préférentielle, la passerelle 41 est commune aux premier et deuxième réseaux d'accès, c'est-à-dire que sa première et sa deuxième interfaces sont connectées directement à des passerelles d'entrée vers les premier et deuxième réseaux d'accès. Pour un réseau d'accès mobile, une telle passerelle d'entrée 31₂ est, par exemple, le GGSN selon la terminologie du 3GPP. Ce peut être également une passerelle PDG ("Packet Data Gateway") selon la terminologie du TISPAN. Pour un réseau d'accès fixe, un noeud multimédia (NM) peut, par exemple, jouer le rôle de passerelle d'entrée 32₂.

Lorsque le terminal d'utilisateur 10, en situation de mobilité, entre dans la zone de couverture du deuxième réseau d'accès 32, il détecte un signal émis par le point d'accès radio de la passerelle domestique 22, laquelle constitue un point de terminaison du réseau d'accès fixe. Le terminal effectue son attachement au réseau d'accès fixe 32 par l'intermédiaire de ce point d'accès. Le terminal s'enregistre ensuite auprès du système de contrôle applicatif 50. Une fois cet enregistrement effectué, le système de contrôle applicatif 50 notifie le serveur de mobilité 51 de ce changement d'un état d'attachement du terminal d'utilisateur 10. Après analyse du nouvel état d'attachement du terminal 10, qui est, par exemple attaché simultanément aux premier et deuxième réseaux d'accès 31, 32, le serveur de mobilité 51 décide de déclencher le basculement de la session audiovisuelle en cours, par exemple, pour faire profiter au terminal d'utilisateur d'une bande passante élargie. A cet effet, le serveur de mobilité envoie au contrôleur de passerelle 52 une requête de basculement de la session audiovisuelle en cours du premier réseau d'accès vers le deuxième. Le contrôleur 52 déclenche alors la mise en oeuvre du procédé de basculement de session audiovisuelle selon l'invention.

Lors d'une première phase, le contrôleur 52 organise le basculement proprement dit de la session audiovisuelle. Un tel basculement est obtenu, sans interruption de transmission du flux de données, en établissant une nouvelle connexion entre le terminal d'utilisateur et la deuxième interface de sortie 41_{S2} de la passerelle de flux de données et en ne procédant au basculement du flux de données de la première interface vers la deuxième interface qu'une fois la nouvelle connexion établie.

Lors d'une deuxième phase, le contrôleur demande à un serveur de profil de contenus d'évaluer la possibilité d'adapter la qualité de la session audiovisuelle en cours . Si la réponse est positive, le contrôleur de passerelle 52 demande au serveur de contenus 61 d'envoyer les flux de données permettant de mettre en oeuvre l'adaptation. Il demande éventuellement à la passerelle et au terminal d'adapter la connexion établie avec la deuxième interface pour pouvoir transmettre les nouveaux flux de données.

Selon un mode de réalisation avantageux, le contenu audiovisuel est encodé sous la forme d'une pluralité de flux audiovisuels échelonnés, comprenant un flux de base et au moins un flux de rehaussement. Le flux de base offre une qualité minimale de visualisation du contenu décodé. Cette qualité peut être enrichie par le décodage du ou des flux de rehaussement. Les techniques qui peuvent être mises en oeuvre pour réaliser ce type d'encodage sont connues de l'homme du métier. Elles utilisent des transformées de type DCT (Discrète Cosinus Transform) ou par ondelettes et un encodage des coefficients obtenus basé sur un parcours des images selon un arbre hiérarchique (Set Partitioning in Hierarchical Trees ou SPIHT) ou selon les plans de bits du poids fort ou poids faible.

Selon ce mode de réalisation, le serveur de contenus 61 peut adapter la qualité de la session audiovisuelle en transmettant au moins un flux de rehaussement en plus du flux de base. Il informe la passerelle 41 de la mise à jour des flux transmis. Dès qu'elle a commencé à recevoir le ou les flux de rehaussement supplémentaires, la passerelle 41 en informe le contrôleur 52, lequel demande au terminal d'utilisateur 10 d'établir avec la passerelle 41 une nouvelle connexion destinée à acheminer le ou les flux de rehaussement supplémentaires de la deuxième interface de la passerelle au terminal d'utilisateur. Le terminal 10 établit cette nouvelle connexion avec la passerelle 41. Cette dernière peut alors mettre la nouvelle connexion en service et commencer à transmettre le flux de rehaussement. Elle notifie enfin le contrôleur de la mise en oeuvre de la nouvelle connexion.

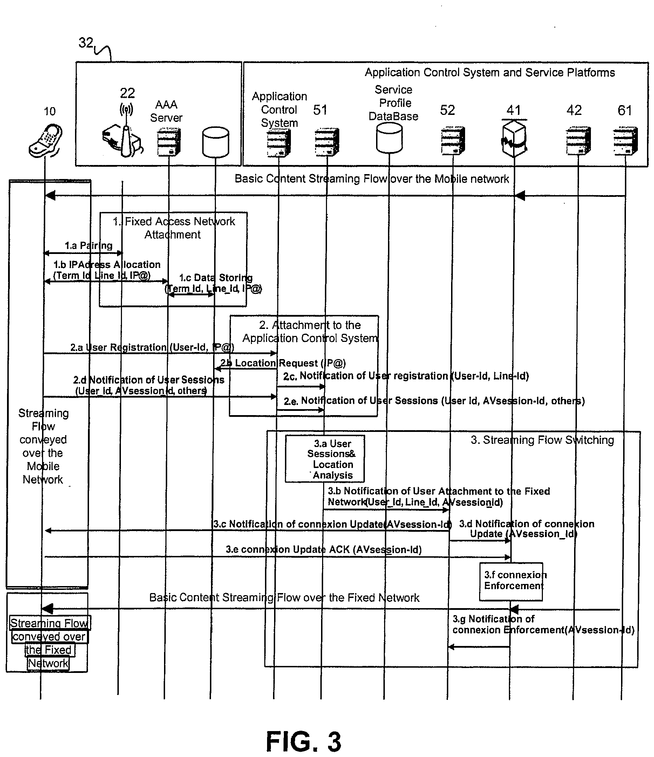

En référence à la figure 3, on présente de façon séquentielle une phase d'attachement du terminal d'utilisateur au deuxième réseau d'accès fixe, une phase d'attachement au système de contrôle applicatif et la phase de basculement du flux de données selon l'invention. L'exemple d'instanciation présenté porte sur le système de contrôle applicatif 50 tel que spécifié à TISPAN.

### 1- Phase d'attachement du terminal au réseau d'accès fixe.

En 1.a, le terminal détecte le signal du point d'accès radio de la passerelle 41 qui constitue le point de terminaison du réseau d'accès fixe. Il y a appairage du terminal avec le point d'accès radio de la passerelle 41, par exemple sur la base du SSID ("Service Set Identifier") émis par le point d'accès 22 qui permet au terminal d'utilisateur 10 de reconnaître le réseau d'accès fixe. A ce stade, la sécurisation des échanges sur la voie radio peut aussi être activée via des mécanismes de niveau 2 tels que WEP ("Write Equivalent Privacy"), WPA2 (Wi-Fi Protected Access 2"). La sécurisation peut aussi être décidée lors des phases ultérieures (sécurisation de niveau IP ou applicatif, par exemple à l'aide de TLS ("Transport Layer Security")).

En 1.b, le terminal effectue son attachement au réseau d'accès fixe. Une identification, authentification et un contrôle d'accès de l'utilisateur au réseau peuvent être mis en oeuvre de manière optionnelle auprès d'un serveur AAA ("Authentication, Authorization, Accounting (AAA) Server"). Lors de cet attachement, le terminal informe le réseau d'accès fixe de ses caractéristiques techniques. L'attachement se termine par l'attribution d'une adresse IP (@ IP) au terminal. L'obtention de l'adresse IP peut être obtenue par échanges DHCP ("Dynamic Host Configuration Protocol") entre le terminal et le serveur DHCP correspondant à l'implémentation du serveur d'authentification dans ce cas. Par exemple, terminal véhicule son identifiant "Term_Id" à travers l'option 60 du protocole DHCP. L'identification de lien d'accès sera, par exemple, intégrée dans l'option 82 du protocole DHCP par un équipement réseau comme le DSLAM ("Digital Subscriber Line Access Multiplexer").

Les caractéristiques du terminal sont typiquement les identifiants de série/modèle/fournisseur, la version de browser, la taille et la résolution d'écran (CIF ("Common Intermediate Format"), QVGA ("Quarter Video Graphic Array"). Les paramètres échangés à cette étape sont:
- la caractérisation du terminal,
- l'identification du lien d'accès à la passerelle 41 à partir duquel le terminal s'est attaché au réseau d'accès fixe, et
- l'adresse IP allouée au terminal.

En 1.c, les informations précédentes relatives à l'attachement de l'utilisateur sont inscrites dans une base de données à l'accès 32₁ ("access database"). La base de données à l'accès est typiquement l'implémentation de la CLF ("Connectivity Session Location and Repository Function") définie par TISPAN. Aucun protocole n'est standardisé à ce jour par TISPAN pour l'écriture en base par le serveur DHCP. On notera que, selon la terminologie 3GPP, cette base de données à l'accès correspond à la base de données HLR ("Home Location Register") 31₁ dans le réseau d'accès mobile 31.

Elles sont complétées par :
- les caractéristiques statiques du lien d'accès fixe telles que définies lors du processus de commande/livraison à savoir le débit que supporte le lien d'accès, et
- les caractéristiques des sessions en cours pour le lien d'accès considéré. Ces informations sont dites dynamiques et sont renseignées par des équipements du réseau d'accès.

Ces informations sont corrélées, ce qui signifie, par exemple, que l'identification de lien d'accès peut être connue à partir de l'information de l'adresse IP utilisée.

### 2- Phase d'attachement de l'utilisateur au système de contrôle applicatif :

On considère, à titre d'exemple, que le terminal embarque un client SIP pour le support des échanges avec l'IMS.

En 2.a, l'utilisateur s'enregistre auprès du système de contrôle applicatif en informant le système de contrôle applicatif de son identité qui sera utilisée pour l'accès aux services souscrits. Par exemple, l'utilisateur s'enregistre à l'IMS avec la méthode SIP REGISTER en indiquant en paramètre son identité notée "User_Id". Des échanges se font entre le terminal et le serveur SIP S-CSCF pour identifier, authentifier et autoriser l'utilisateur.

Les paramètres échangés à cette étape sont :
- les données identifiant l'utilisateur,
- l'adresse IP allouée au terminal.

En 2.b, le système de contrôle applicatif interroge la base de données d'accès 32₁ du deuxième réseau d'accès 32 pour connaître la localisation de l'utilisateur. Le paramètre utilisé pour l'interrogation de la base est l'adresse IP allouée au terminal. Un équipement P-CSCF jouant le rôle de premier proxy SIP de l'IMS (Proxy-Call Server Control Function) interroge la base de données CLF via l'interface TISPAN e2 supportant le protocole Diameter pour récupérer l'information de lien d'accès (Line_Id) associée à l'adresse IP allouée au terminal.

En 2.c, le système de contrôle applicatif notifie le serveur de mobilité 51 de l'enregistrement de l'utilisateur et de sa localisation dans le deuxième réseau d'accès. Les informations remontées sont l'identité de l'utilisateur et sa localisation réseau (identification de la ligne typiquement). Le serveur SIP S-CSCF notifie le serveur de mobilité 51 de l'enregistrement de l'utilisateur via la méthode SIP REGISTER. L'information de localisation est insérée dans le SIP REGISTER.

En 2.d, le terminal de l'utilisateur notifie le système de contrôle applicatif des sessions multimédia en cours de l'utilisateur, par exemple le serveur SIP (S-CSCF) à l'aide d'un SIP MESSAGE. L'identifiant de l'utilisateur et les identifiants de sessions sont insérés.

Les paramètres échangés à cette étape sont :
- l'identifiant de l'utilisateur,
- les services en cours sur le terminal d'utilisateur 10 par l'intermédiaire du premier réseau d'accès (mobile) et notamment la session audiovisuelle dans le cas présent.

En 2.e, le système de contrôle applicatif, par exemple le serveur SP S-CSCF notifie le serveur de mobilité 51 des sessions multimédia en cours de l'utilisateur, par exemple en relayant le SIP MESSAGE au serveur de mobilité. Les paramètres échangés à cette étape sont :
- l'identifiant de l'utilisateur,
- les services en cours sur le terminal d'utilisateur 10 par l'intermédiaire du premier réseau d'accès (mobile) et notamment la session audiovisuelle dans le cas présent.

Dans le cas présent, nous considérons que l'utilisateur est en cours de visualisation d'un contenu multimédia et il y a alors déclenchement de la phase de basculement du flux de distribution sur le réseau d'accès fixe.

### 3- Phase de basculement du flux de streaming.

On rappelle que la réalisation de cette phase de basculement de la session audiovisuelle en cours est déclenchée au niveau du contrôleur de passerelle 52 par la réception d'une requête de basculement de la façon suivante :
En 3.a, sur la base de l'information de localisation de l'utilisateur (remontée à l'étape 2.c) et de la connaissance de la topologie du réseau, le serveur de mobilité 51 identifie le contrôleur de la passerelle de flux de données 52 ayant en charge le contrôle de la passerelle 41 à travers laquelle est délivré le contenu multimédia au terminal d'utilisateur 10.
En 3.b, le serveur de mobilité 51 envoie au contrôleur de la passerelle 52 une requête de basculement de la session audiovisuelle sur le réseau d'accès fixe 32. Les informations reçues par le contrôleur, par exemple dans un message SIP, sont :
- l'identifiant du lien d'accès,
- l'adresse IP de l'utilisateur,
- l'identifiant de session audiovisuelle en cours.

On notera que l'identité de l'utilisateur utilisée lors de son enregistrement au système de contrôle applicatif n'est pas forcément celle utilisée durant cette troisième phase de basculement du contenu. Ceci est dû au fait que le réseau d'accès et le système de contrôle applicatif peuvent être gérés par deux opérateurs différents et donc utiliser des identités différentes pour un même utilisateur. Une autre raison provient du fait que le deuxième réseau d'accès n'identifie pas nécessairement l'utilisateur lors de l'allocation de l'adresse IP et que le système de contrôle applicatif ne peut donc pas alimenter la base de données à l'accès 41₁.

Par conséquent, l'utilisation de l'adresse IP est préférée à l'utilisation des identités pour identifier le terminal d'utilisateur lors des échanges mis en oeuvre pendant cette troisième phase.

En 3.c, le contrôleur de passerelle 52 envoie au terminal d'utilisateur 10 une commande d'établissement de connexion à ladite deuxième interface 41_{S2}, ladite commande comprenant des informations nécessaires à ladite connexion. Le contrôleur informe le terminal utilisateur d'un basculement imminent du réseau mobile vers le réseau fixe pour la session audiovisuelle en cours. La méthode utilisée peut s'appuyer sur l'envoi d'un fichier SDP ("Session Description Protocol") ou sur l'envoi d'un message SNMP ("Simple Network Management Protocol"). Ce fichier ou ce message doit contenir les paramètres nécessaires au terminal pour établir la connexion (url serveur, url contenu, clé identification, @IP et port source; @IP et port destination) permettant de procéder au transfert de la couche de base via les interfaces associées à la nouvelle connexion (média leg) réseau.

Ces informations comprennent notamment des paramètres pour la réalisation du basculement tels qu'un identifiant de la nouvelle interface de la passerelle à travers laquelle doit maintenant transiter le flux de distribution. Un autre paramètre échangé à cette étape est l'identifiant de session audiovisuelle en cours.

En 3.d, le contrôleur de passerelle 52 notifie la passerelle 41 de l'envoi d'une commande d'établissement de connexion au terminal destinée à mettre à jour la deuxième interface pour le transfert du contenu en cours de distribution par l'intermédiaire de la première interface. Une telle notification comprend des informations relatives à la session audiovisuelle et au terminal d'utilisateur. Un autre paramètre échangé à cette étape est l'identifiant de session audiovisuelle en cours. La notification peut être réalisée avec le protocole H248, comme spécifié par TISPAN. D'autres protocoles peuvent aussi permettre la commande de la mise à jour du plan de transfert comme RTCP.
Dans le cas H248, la commande MODIFY permet de mettre à jour l'interface de sortie vers le terminal pour exécuter le basculement.

En 3.e, le terminal d'utilisateur 10 établit la nouvelle connexion avec la passerelle 41 en conformité avec les paramètres de la notification 3.c. Il le fait par émission d'une requête RTSP construite en exploitant les paramètres fournis par le contrôleur de passerelle (url serveur, url contenu, clé identification, @IP et port source; @IP et port destination). Un autre paramètre échangé à cette étape est l'identifiant de session audiovisuelle en cours.

En 3.f, la passerelle exécute la mise à jour du basculement de la première interface 41_{S1} vers le réseau mobile vers la deuxième interface 41_{S2} vers le réseau fixe. Dès lors, le basculement est effectif, ce qui permet notamment à l'opérateur de décharger l'usage de ressources du réseau mobile au profit de ressources de réseau fixe, moins coûteuses. A ce stade, le basculement du contenu audiovisuel en cours de distribution est effectif, sans adaptation de la qualité. L'éventuelle adaptation de qualité de la session audiovisuelle sera mise en oeuvre en phase 4.

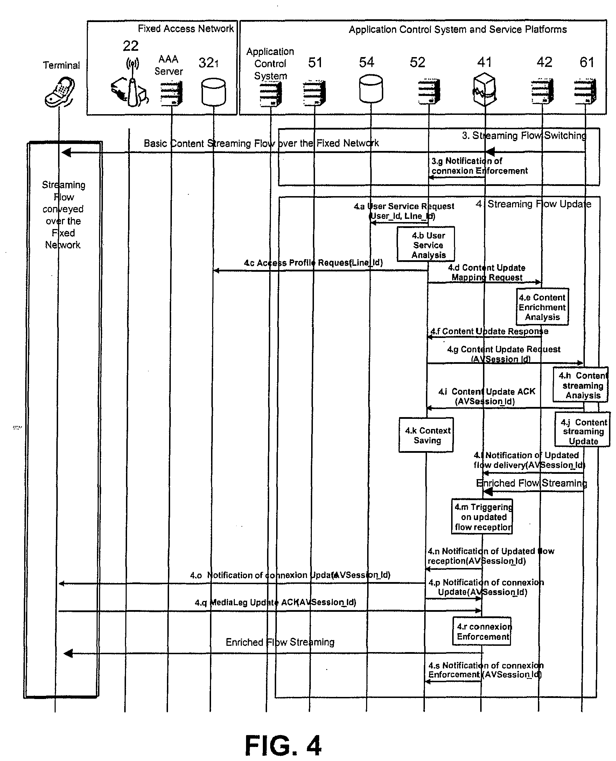

En 3.g, la passerelle 41 informe le contrôleur de passerelle 52 de la réalisation du basculement. Cette notification de la mise à jour de l'interface est faite avec le message NOTIFY dans le cas d'une implémentation utilisant le protocole H248.
Le paramètre échangé à cette étape est l'identifiant de session audiovisuelle en cours.
En référence à la figure 4, on présente ensuite un diagramme de séquence de la phase d'adaptation de qualité de la session audiovisuelle après son basculement de la première vers la deuxième interface de la passerelle.

### 4- Phase d'adaptation de qualité de la session audiovisuelle:

En 4.a, le contrôleur de passerelle 52 interroge une base de données 54 des profils de services de l'utilisateur, afin de connaître les droits de cet utilisateur pour le service de rehaussement de la qualité de la visualisation pour le lien d'accès considéré. Les paramètres échangés à cette étape sont :
- l'identifiant de l'utilisateur,
- l'identifiant du lien d'accès,
On considère ici que l'implémentation de cette phase peut correspondre à une offre de service à l'utilisateur de la part de l'opérateur. C'est pour cette raison que l'opérateur effectue un contrôle des droits de l'utilisateur pour ce service.
Dans le cas d'une instanciation par une architecture de type IMS, la base de profil de service ("Service Profile Database") correspond au HSS ("Home Subscriber Server") dans la terminologie 3GPP ou UPSF ("User Profile Server Function") selon la terminologie TISPAN. Des échanges utilisant un protocole pour interroger une base de données, de type Diameter, permettent de récupérer le profil de service de l'utilisateur.

En 4.b, le contrôleur de passerelle 52 analyse les droits de l'utilisateur pour le service. On notera que l'utilisateur peut avoir acquis des droits d'accès différents pour les différents réseaux d'accès et donc qu'il peut avoir droit au service de rehaussement pour certains réseaux d'accès et pas pour d'autres.

En 4.c, le contrôleur de passerelle interroge la base de données à l'accès 32₁ sur la base de l'identifiant du lien d'accès, pour récupérer des informations liées à un contexte de ladite session audiovisuelle basculée sur la deuxième interface. Il s'agit notamment d'obtenir des informations sur la disponibilité des ressources de la ligne utilisée par l'utilisateur ainsi que les caractéristiques du terminal d'utilisateur 10. Le contrôleur obtient en réponse :
- une donnée statique ou dynamique liée à la ligne utilisée par l'utilisateur. La donnée statique (DS) correspond à la caractéristique du lien d'accès telle que définie lors du processus de commande/livraison. La donnée dynamique notée DD correspond à la ressource restante après soustraction des ressources réseau utilisées par les services en cours sur ce lien d'accès;
- les capacités du terminal mobile de l'utilisateur.

Dans la spécification TISPAN, l'interface entre le contrôleur de passerelle 52 et la base de données à l'accès 32₁ est nommée interface e2 et le protocole -utilisé pour récupérer les paramètres d'accès est Diameter.

En 4.d, le contrôleur de passerelle commande au serveur de profils de contenus 55 une évaluation d'une adaptation de qualité du contenu audiovisuel transmis pouvant être supportée par la deuxième interface pour la session audiovisuelle en cours en fonction des informations récupérées. En particulier, le contrôleur 52 interroge le serveur de profil des contenus 55 sur les caractéristiques du contenu (versions, formats, qualités, niveaux d'enrichissement possibles) en cours de distribution qui peuvent être supportées par la deuxième interface en fonction de sa bande passante disponible et par le terminal d'utilisateur en fonctions de ses capacités.
Lorsque les données d'entrée sont des données DS, les caractéristiques du contenu retournées sont la valeur minimale garantie. Remarque: la valeur minimale garantie constitue un rehaussement de la qualité du contenu compte tenu :
- de la large capacité en bande passante des réseaux fixes comparée à la bande passante plus limitée pour les réseaux mobiles,
- de l'hypothèse que le lien d'accès est configuré/partitionné pour fournir a minima la bande passante nécessaire pour le mode "performance minimal garantie".

Lorsque les données d'entrée sont des données DD, les caractéristiques du contenu retournées sont optimisées et profitent au maximum de la bande passante restante et disponible pour le lien d'accès considéré.

Cette étape peut, par exemple, être mis en oeuvre à l'aide d'un protocole de type Web services ou HTTP ("Hypertext Transfer Protocol") avec en paramètres d'entrée des données telles que le type d'accès, le type de terminal, les ressources réseau et profil service).

En 4.e, sur la base des données relatives au terminal et à la bande passante (DS: bande passante statique ne prenant pas en compte les sessions en cours sur la ligne considérée - DD: bande passante dynamique correspondant à la bande passante restante), le serveur de profils de contenu analyse l'adaptation de qualité qui pourra être supportée sur le deuxième réseau d'accès pour la transmission du contenu audiovisuel.

En 4.f, le serveur de profil de contenus 55 renvoie au contrôleur de passerelle 52 les caractéristiques de l'adaptation de qualité pouvant être supportées, par exemple en utilisant un protocole de type Web services ou SNMP ou http.

En 4.g, le contrôleur de passerelle 52 demande auprès du serveur de contenus 61 une mise à jour de la qualité du contenu en cours de distribution sur le terminal sur la base des caractéristiques d'adaptation retournées durant la phase 4.f. Un paramètre échangé à cette étape est l'identifiant de session audiovisuelle en cours.

Le contrôleur de passerelle 52 émet une ou plusieurs requêtes (RTSP ou SIP) auprès du serveur de contenus, lesquelles requêtes sont construites en exploitant les paramètres fournis par le serveur de profil de contenus (url serveur, url contenu, clé identification, @IP et port source; @IP et port destination). Dans le cas d'une implémentation SIP, cette étape demande une évolution du serveur de contenu pour supporter ce protocole. Dans le cas d'une implémentation RTSP, c'est au contrôleur de MGW de supporter la fonction de proxy RTSP.

En 4.h, le serveur de contenus 61 analyse la demande de mise à jour. Il vérifie notamment sa capacité à traiter la demande d'adaptation de qualité.

En 4.i, le serveur de contenus 61 autorise la demande de mise à jour. Un paramètre échangé à cette étape est l'identifiant de session audiovisuelle en cours. La méthode utilisée est, par exemple, basée sur l'émission de messages RTCP.

En 4.k, le contrôleur de passerelle 52 sauvegarde des informations de contexte comprenant notamment les caractéristiques de l'adaptation de qualité de la phase 4.f. L'intérêt de cette sauvegarde du contexte sera expliqué dans la suite du mémoire.

En 4.l, le serveur de contenus 61 notifie la passerelle 41 de la mise à jour de la session audiovisuelle et donc du transfert imminent des flux de rehaussement permettant l'adaptation de qualité. Un paramètre échangé à cette étape est l'identifiant de session audiovisuelle en cours. La méthode utilisée est basée sur l'émission de message RTCP.

Dans le mode de réalisation particulier selon lequel le contenu audiovisuel est encodé sous la forme d'un flux de base et d'au moins un flux de rehaussement, l'adaptation de qualité se traduit par l'envoi, par le serveur de contenus 61 à la passerelle 41, d'un flux de rehaussement, en complément du flux de base.

Les étapes suivantes concernent la mise en oeuvre de la réception de ce flux de rehaussement par le terminal d'utilisateur 10 :
En 4.m, la passerelle 41 se met en attente de réception du flux de rehaussement.

En 4.n, la passerelle 41 notifie le contrôleur de passerelle 52 de la réception de flux de rehaussement. Un paramètre échangé à cette étape est l'identifiant de session audiovisuelle en cours. Une telle notification est faite à l'aide d'un message NOTIFY dans le cas d'une implémentation utilisant le protocole H248.

En 4.o, le contrôleur de passerelle 52 informe le terminal utilisateur d'un enrichissement imminent de la qualité du contenu pour la session audiovisuelle en cours et lui envoie une commande de connexion supplémentaire à la deuxième interface 41_{S2} de la passerelle 41. Cette commande comprend notamment des informations relatives à ladite connexion supplémentaire. Un paramètre échangé à cette étape est l'identifiant de session audiovisuelle en cours. La méthode utilisée peut s'appuyer sur l'envoi d'un fichier SDP ou sur l'envoi d'un message SNMP. Ce fichier ou ce message doit contenir les paramètres nécessaires au terminal pour établir la connexion (url serveur, url contenu, clé identification, @IP et port source; @IP et port destination) permettant de procéder au transfert des flux de rehaussement.

En 4.p, le contrôleur de passerelle 52 envoie à la passerelle 41 une notification indiquant que le flux de rehaussement reçu est destiné être transmis via la connexion supplémentaire. Un paramètre échangé à cette étape est l'identifiant de session audiovisuelle en cours. Dans un contexte H248, la création de nouvelle(s) interface(s) pour le support du flux de rehaussement est faite à partir de la commande ADD.

En 4.q, le terminal établit la connexion supplémentaire avec la passerelle en conformité avec les paramètres de la notification 4.o. Un paramètre échangé à cette étape est l'identifiant de session audiovisuelle en cours. Il le fait, par exemple, en émettant des requêtes RTSP construites en exploitant les paramètres fournis par le contrôleur de MGW (url serveur, url contenu, clé identification, @IP et port source; @IP et port destination). Les requêtes, une fois traitées par la passerelle 41 (séquence 4r) déclenchent le transfert des couches de rehaussement sélectionnées.

En 4.r, la passerelle 41 met en service la connexion supplémentaire pour envoyer le flux de rehaussement au terminal d'utilisateur 10.

Dès lors, l'utilisateur visualise un contenu rehaussé qui tire profit des capacités du terminal et des capacités du lien d'accès au deuxième réseau d'accès.

En 4.s, la passerelle notifie le contrôleur de passerelle de la mise en service de la connexion supplémentaire pour la transmission du flux de rehaussement au terminal d'utilisateur 10. Cette notification est faite avec le message NOTIFY dans le cas d'une implémentation utilisant le protocole H248.

On considère maintenant, à titre de deuxième exemple, le cas où l'utilisateur décide de quitter son domicile avant la fin de la session audiovisuelle. Pour rappel, il a initié la session audiovisuelle depuis le réseau d'accès mobile. Lorsqu'il est rentré à son domicile, la session audiovisuelle a été basculée sur le réseau fixe pour faire profiter à l'utilisateur des conditions de transmission plus favorables et pour libérer les ressources du réseau mobile.

L'utilisateur souhaite maintenant continuer à visualiser la session en cours pendant son trajet. On suppose, comme précédemment, que l'utilisateur est dans la zone de couverture du réseau d'accès mobile et que son terminal est attaché à ce réseau d'accès mobile. On peut considérer également que le terminal d'utilisateur ne s'était pas désactivé du réseau mobile lors de sa connexion au réseau fixe.

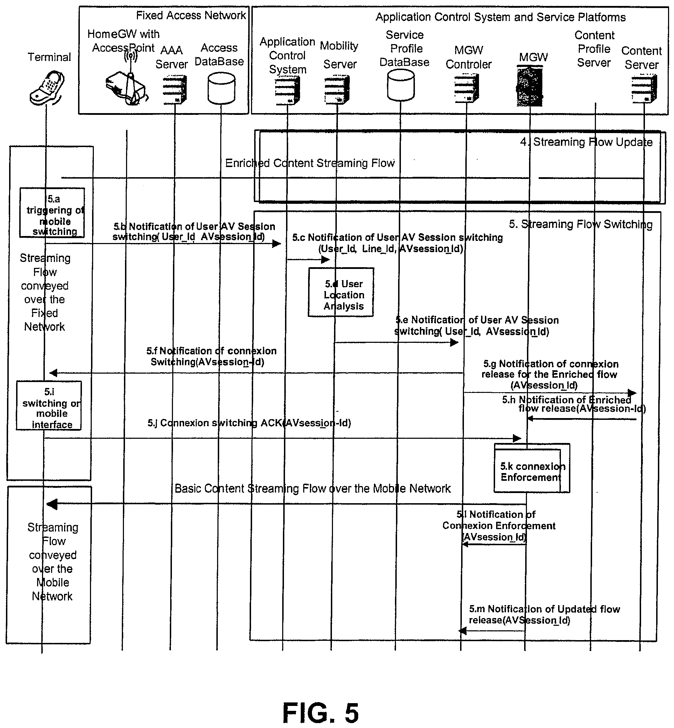

En référence à la figure 5, on présente maintenant un séquencement d'étapes mises en oeuvre lors du basculement de la session audiovisuelle, du premier réseau d'accès fixe au deuxième réseau d'accès mobile.

En 5.a, le terminal d'utilisateur détecte une mauvaise qualité du signal radio provenant du point d'accès radio de la passerelle domestique 22, due à son éloignement progressif par rapport à ce point d'accès.

En 5.b, le terminal d'utilisateur 10 informe le système applicatif 50, par exemple un contrôleur de session SIP S-CSCF (Serving Call Session Control Function) qu'il souhaite se désenregistrer du réseau d'accès fixe. Les paramètres échangés à cette étape sont notamment :
- l'identifiant de l'utilisateur,
- l'identifiant de session audiovisuelle en cours.
Il le fait, par exemple, à l'aide d'un message SIP.

On notera également que, concernant l'accès fixe, le système de contrôle applicatif 50 vérifie à intervalle de temps régulier (et paramétrable) que l'utilisateur est toujours connecté au réseau d'accès fixe car le terminal envoie régulièrement des messages d'enregistrement du type "keep alive" .

En 5.c, le système de contrôle applicatif 50, par l'intermédiaire du serveur SIP S-CSCF transmet au serveur de mobilité 51 une notification de désenregistrement du terminal du réseau d'accès fixe, comprenant une information de localisation du terminal d'utilisateur, par exemple, un identifiant du lien d'accès auquel la passerelle 22 est connectée. Il utilise, par exemple, un message SIP.

On suppose ici que le système de contrôle applicatif 50 garde en mémoire l'information de localisation de l'utilisateur attaché au réseau d'accès fixe. Dans le cas contraire, le système de contrôle applicatif interroge la base de données à l'accès 32₁ comme à l'étape 2.b. Les paramètres échangés à cette étape sont notamment :
- l'identifiant de l'utilisateur,
- l'identifiant de session audiovisuelle en cours,
- l'identifiant du lien d'accès.

En 5.d, le serveur de mobilité 51 analyse la notification reçue et décide de déclencher le basculement de la session audiovisuelle du premier vers le deuxième réseau d'accès. Pour ce faire, sur la base de l'information de localisation de l'utilisateur et de la connaissance de la topologie du réseau, le serveur de mobilité 51 identifie le contrôleur de la passerelle de flux de données 52 ayant en charge le contrôle de la passerelle 41 à travers laquelle est transporté le contenu multimédia de la session audiovisuelle concernée par la demande de basculement.

En 5.e, le serveur de mobilité 51 envoie au contrôleur de passerelle 52 une requête de basculement de la session audiovisuelle en cours vers le réseau mobile. Les paramètres échangés à cette étape sont notamment :
- l'identifiant de l'utilisateur,
- l'identifiant de session audiovisuelle en cours,

En 5.f, le contrôleur de passerelle 52 informe le terminal utilisateur 10 d'un basculement imminent du réseau fixe vers le réseau mobile pour la session audiovisuelle en cours et lui envoie une commande d'établissement de connexion à la première interface de la passerelle 41 vers le réseau d'accès mobile 31. Cette commande comprend des informations nécessaires à la mise en oeuvre d'une telle connexion, en indiquant notamment l'adresse de la première interface de sortie 41_{S1} de la passerelle 41 à travers laquelle doit maintenant transiter le flux de données constitutif du contenu audiovisuel.

La méthode utilisée peut s'appuyer sur l'envoi d'un fichier SDP ou sur l'envoi d'un message SNMP. Ce fichier ou ce message doit contenir les paramètres nécessaires au terminal pour établir la connexion (url serveur, url contenu, clé identification, @IP et port source; @IP et port destination) permettant de procéder au transfert de la couche de base sur le réseau mobile avec l'interface associée. Ces paramètres peuvent être par défaut extraits d'une base de données stockant le contexte réseau initial (avant le premier basculement).

En 5.g, le contrôleur de passerelle 52 demande une mise à jour de la qualité du contenu. En effet, lorsqu'une connexion supplémentaire a été établie avec la deuxième interface de la passerelle 41 pour transmettre un flux de rehaussement vers le réseau d'accès fixe, le procédé selon l'invention comprend une étape de déconnexion de cette connexion supplémentaire. Le contrôleur de passerelle 52 émet une ou plusieurs requêtes (RTSP ou SIP) sur le Server de contenu pour interrompre le transfert par le serveur de contenu des niveaux de rehaussement identifiés pour cette session lors de la phase d'enrichissement. Les requêtes sont construites en exploitant les paramètres obtenus par la MGW lors de la phase d'enrichissement (url serveur, url contenu, clé identification, @IP et port source; @IP et port destination) correspondant à la séquence 4.n.

En 5.h, le serveur de contenu cesse d'envoyer le contenu enrichi pour la session en cours. La transmission du flux de rehaussement est ainsi stoppée. Seule la transmission du flux de base est maintenue pendant le processus de basculement. Le serveur de contenus 61 informe la passerelle de l'arrêt du transfert des niveaux de rehaussement sélectionnés. La méthode utilisée est basée sur l'émission de message RTCP.

En 5.i, sur réception de l'information de l'étape 5.f, le terminal établit une connexion avec la première interface de sortie 41_{S1} de la passerelle 41. Il le fait, par exemple, par émission d'une requête RTSP construite en exploitant les paramètres fournis par le contrôleur de MGW (url serveur, url contenu, clé identification, @IP et port source; @IP et port destination).

En 5.j, le terminal bascule sur la première interface avec le réseau mobile.

En 5.k, la passerelle exécute la mise à jour du basculement de l'interface du réseau fixe vers l'interface du réseau mobile. A la fin de cette étape, l'utilisateur visualise le contenu de base à travers l'interface du réseau mobile.

En 5.l, la passerelle 41 informe le contrôleur de passerelle 52 de la réalisation du basculement. Un paramètre échangé à cette étape est l'identifiant de session audiovisuelle en cours. La notification de la mise à jour de l'interface (avec le réseau mobile) est faite avec le message NOTIFY dans le cas d'une implémentation utilisant le protocole H248.

En 5.m, la passerelle 41 notifie le contrôleur de passerelle 52 de la désactivation du flux de rehaussement. Cette notification de la libération des ressources pour le flux de réhaussement est faite avec le message NOTIFY dans le cas d'une implémentation utilisant le protocole H248.

Dans cet exemple, on considère que le réseau d'accès mobile n'a pas les ressources nécessaires, en termes de bande passante notamment, pour supporter la transmission d'un flux de rehaussement en complément du flux de base. Toutefois, l'invention n'est pas limitée à cet exemple. On peut très bien envisager à court terme un réseau d'accès mobile capable d'acheminer un ou plusieurs flux de rehaussement. Dans ce cas, la deuxième phase du procédé selon l'invention est mise en oeuvre de façon analogue au séquencement décrit en figure 4.

A ce stade, le terminal d'utilisateur 10 reçoit donc le flux de base seul par l'intermédiaire du premier réseau d'accès 31. Considérons maintenant que l'utilisateur, change d'avis et décide de rentrer à son domicile pour visualiser le contenu audiovisuel dans de meilleures conditions jusqu'à la fin de la session. Comme évoqué précédemment, le procédé selon l'invention met en oeuvre une étape de sauvegarde du contexte lié à une session dans un réseau d'accès. Dans le cas d'espèce, le contexte de sauvegarde est mis en oeuvre lors de la séquence 4.k pour la phase d'enrichissement du contenu. Cette étape consiste à sauvegarder, au niveau du contrôleur de passerelle 52, les paramètres de contexte liés à l'enrichissement du flux de données transmis pour la session audiovisuelle considérée.

Ainsi, lorsque le terminal d'utilisateur se rapproche d'un point d'accès radio du deuxième réseau d'accès, la mise en place du contexte de sauvegarde permet de ne pas déclencher les étapes 4.a, 4.b, 4.c, 4.d, 4.e, 4.f et de commencer alors le séquencement de l'enrichissement à partir de l'étape 4.g.

L'hypothèse sous-jacente qui est faite est que les conditions sur la disponibilité des ressources réseau restent valides puisque la mobilité du réseau fixe vers mobile puis fixe est instantanée.

Pour la mise en oeuvre pratique de ce mécanisme de sauvegarde, on peut considérer l'implémentation d'un timer configurable par l'opérateur. Lors de la mobilité de l'utilisateur du réseau fixe vers le réseau mobile, il y a déclenchement de ce timer et si l'utilisateur fait ensuite une mobilité inverse (du réseau mobile vers ce même réseau fixe) avant l'expiration de ce timer, alors il y a prise en compte de ce contexte. Dans le cas, où il y a expiration de ce timer, le séquencement de l'enrichissement est réalisé de manière complète (c'est-à-dire avec ré-activation des étapes 4.a, 4.b, 4.c, 4.d, 4.e, 4.f) puisque la disponibilité des ressources n'est plus assurée.

## Revendications

1. Procédé de basculement d'une session audiovisuelle dans un réseau de télécommunications (1) comprenant au moins un premier réseau d'accès (31) et un deuxième réseau d'accès (32), une session audiovisuelle étant en cours, pendant laquelle au moins un terminal d'utilisateur (10) attaché audit premier réseau d'accès et apte à s'attacher audit deuxième réseau d'accès, reçoit d'un serveur de contenus (61) au moins un flux de données constitutif d'un contenu audiovisuel par l'intermédiaire d'une passerelle (41) de flux de données comprenant une première interface (41_{S1}) vers ledit premier réseau d'accès et une deuxième interface de sortie (41_{S2}) vers ledit deuxième réseau d'accès, le contenu audiovisuel étant encodé sous la forme d'une pluralité de flux de données échelonnés comprenant un flux de base et au moins un flux de rehaussement, ledit procédé étant **caractérisé en ce que**, lorsque ledit terminal s'est attaché audit deuxième réseau d'accès, ledit procédé comprend les étapes suivantes de :
- réception d'une requête de basculement de session vers le deuxième réseau d'accès, ladite requête de basculement ayant été émise suite à un changement d'un état d'attachement dudit terminal audit deuxième réseau;
- commande de basculement de ladite session audiovisuelle à ladite passerelle de flux de données de la première interface de sortie à la deuxième interface de sortie;
- récupération d'informations liées à un contexte de ladite session audiovisuelle basculée sur la deuxième interface;
- commande d'évaluation à un serveur de profils de contenus (55) d'une adaptation de qualité du contenu audiovisuel transmis pouvant être supportée par ladite deuxième interface pour ladite session audiovisuelle en fonction desdites informations récupérées;
- réception d'une réponse de la part dudit serveur de profils de contenus (55) et demande de mise à jour dudit flux de données émis lors de ladite session audiovisuelle au serveur de contenus (61) afin d'assurer ladite adaptation de qualité évaluée, ladite réponse dudit serveur de profil de contenus (55) indiquant un nombre de flux de rehaussement à activer,
- sauvegarde d'informations de contexte relatives aux connexions établies entre ledit terminal d'utilisateur et ladite passerelle de flux de données pour ladite session audiovisuelle pendant une durée prédéterminée.

2. Procédé de basculement d'une session audiovisuelle selon la revendication 1, **caractérisé en ce qu'**il comprend, préalablement à l'étape de commande de basculement, les étapes suivantes:
- envoi audit terminal d'utilisateur (10) d'une commande d'établissement de connexion à ladite deuxième interface (41_{S2}), ladite commande comprenant des informations nécessaires à ladite connexion;
- envoi à la passerelle de flux de données d'une notification d'envoi de commande de connexion au terminal, comprenant des informations relatives à ladite session et audit terminal.

3. Procédé de basculement d'une session audiovisuelle selon la revendication 1, **caractérisé en ce qu'**il comprend, suite à l'étape de commande de basculement et préalablement à l'étape de demande de mise à jour dudit flux de données, une étape de réception d'une notification de la part de ladite passerelle indiquant que le basculement dudit flux de données a été effectué.

4. Procédé de basculement d'une session audiovisuelle selon l'une quelconque des revendications 1 à 3, **caractérisé en ce que** lesdites informations de contexte récupérées comprennent au moins une information parmi les informations suivantes :
- une information relative à un profil dudit utilisateur;
- une information relative à des ressources d'un deuxième lien d'accès situé entre ladite deuxième interface et le terminal d'utilisateur lorsque ce dernier est attaché au deuxième réseau d'accès;
- une information relative à des capacités dudit terminal d'utilisateur; et
- une information relative à des caractéristiques d'encodage du contenu audiovisuel par le serveur de contenus.

5. Procédé de basculement d'une session audiovisuelle selon l'une des revendications 1 à 4, **caractérisé en ce que**, ledit procédé comprend les étapes suivantes :
- commande d'émission dudit au moins flux de rehaussement au serveur de contenus (61),
- réception d'une notification par la passerelle confirmant la réception dudit au moins un flux de rehaussement sur son interface d'entrée (41 ₑ),
- envoi au terminal d'utilisateur d'une commande de connexion supplémentaire à ladite deuxième interface (41_{S2}) de ladite passerelle destinée à acheminer ledit flux de rehaussement, ladite commande comprenant des informations relatives à ladite connexion supplémentaire;
- envoi à la passerelle d'une notification indiquant que ledit au moins un flux de rehaussement reçu est destiné à ladite connexion supplémentaire; et
- réception d'une confirmation de mise en service de la connexion supplémentaire pour la transmission dudit au moins un flux de rehaussement.

6. Procédé de basculement d'une session audiovisuelle selon l'une quelconque des revendications 1 à 5, **caractérisé en ce que**, lorsqu'une connexion supplémentaire a été établie avec la première interface de ladite passerelle pour transmettre un flux de rehaussement, ledit procédé comprend, suite à l'étape de réception d'une requête de basculement vers ledit deuxième réseau d'accès par ledit terminal d'utilisateur, une étape de déconnexion de ladite connexion supplémentaire.

7. Contrôleur de passerelle de flux de données audiovisuelles dans un réseau de télécommunications comprenant un premier réseau d'accès, un second réseau d'accès et une passerelle de flux de données comprenant une interface d'entrée apte à recevoir des flux de données et une première et une deuxième interfaces de sortie aptes à transmettre lesdits flux respectivement vers le premier et le deuxième réseau d'accès, une session audiovisuelle étant en cours pendant laquelle un terminal d'utilisateur attaché audit premier réseau d'accès et apte à s'attacher audit deuxième réseau d'accès, reçoit d'un serveur de contenus au moins un flux de données constitutif d'un contenu audiovisuel par l'intermédiaire de ladite première interface, le contenu audiovisuel étant encodé sous la forme d'une pluralité de flux de données échelonnés et comprenant un flux de base et au moins un flux de rehaussement, **caractérisé en ce que** ledit contrôleur comprend des moyens de :
- réception d'une requête de basculement de ladite session audiovisuelle vers le deuxième réseau d'accès émise suite un changement d'un état d'attachement dudit terminal d'utilisateur auxdits premier et deuxième réseaux d'accès;
- envoi à ladite passerelle d'une commande de basculement de ladite session audiovisuelle de ladite première interface vers ladite deuxième interface;
- récupération d'informations liées à un contexte de ladite session audiovisuelle basculée sur la deuxième interface;
- commande d'évaluation d'une adaptation de qualité de ladite session audiovisuelle pouvant être supportée par ladite deuxième interface en fonction desdites informations récupérées;
- réception d'une réponse de la part dudit serveur de profils de contenus (55), ladite réponse indiquant un nombre de flux de rehaussement à activer,
- demande de mise à jour de la session audiovisuelle auprès dudit serveur de contenus permettant d'assurer ladite adaptation de qualité supportée, et
- sauvegarde d'informations de contexte relatives aux connexions établies entre ledit terminal d'utilisateur et ladite passerelle de flux de données pour ladite session audiovisuelle pendant une durée prédéterminée.

8. Passerelle de flux de données (41) dans un réseau de télécommunications comprenant au moins un premier réseau d'accès et un deuxième réseau d'accès, ladite passerelle comprenant une interface d'entrée apte à recevoir au moins un flux de données émis par un serveur de contenus (61) et des première et deuxième interfaces de sortie aptes à transmettre ledit au moins un flux de données reçu respectivement vers lesdits premier et deuxième réseau d'accès, une session audiovisuelle étant en cours pendant laquelle au moins un terminal d'utilisateur attaché audit premier réseau d'accès et apte à s'attacher audit deuxième réseau d'accès, reçoit au moins un flux de données constitutif d'un contenu audiovisuel encodé par l'intermédiaire de ladite première interface de sortie, le contenu audiovisuel étant encodé sous la forme d'une pluralité de flux de données échelonnés comprenant un flux de base et au moins un flux de rehaussement, ladite passerelle est **caractérisée en ce qu'**elle comprend :
- des moyens de réception d'une commande de basculement de ladite session audiovisuelle de la première vers la deuxième interface, émise suite à un changement d'un état d'attachement dudit terminal d'utilisateur auxdits premier et deuxième réseaux d'accès;
- des moyens de basculement du contenu audiovisuel de la première interface vers la deuxième interface en cours de transmission;
- des moyens de réception d'une notification d'adaptation de qualité de ladite session audiovisuelle par ledit serveur de contenus (61); et
- des moyens de mise à jour de ladite deuxième interface de sortie (41_{S2}) aptes à mettre en oeuvre ladite adaptation de qualité.

9. Passerelle de flux audiovisuels selon la revendication 8, **caractérisée en ce qu'**elle comprend des moyens de réception d'une notification d'envoi de commande de connexion à ladite deuxième interface au terminal par ledit contrôleur, **en ce qu'**elle est apte à mettre en oeuvre lesdits moyens de basculement après réception de ladite notification, et **en ce qu'**elle est apte à mettre en oeuvre des moyens d'envoi d'une confirmation de basculement audit contrôleur, une fois ladite connexion établie avec le terminal.

10. Passerelle de flux de données selon l'une des revendications 8 et 9, **caractérisée en ce que**, le contenu audiovisuel étant encodé sous la forme d'une pluralité de flux de données échelonnés, comprenant au moins un flux de données de base et au moins un flux de rehaussement, ladite notification de mise à jour indique un nombre de flux de données de rehaussement dont la transmission doit être activée, **en ce que** lesdits moyens de mise à jour de la deuxième interface comprennent des moyens d'établissement d'au moins une connexion supplémentaire avec ledit terminal d'utilisateur pour acheminer ledit au moins un flux de rehaussement et **en ce que** ladite passerelle comprend des moyens d'envoi d'une confirmation de mise à jour de ladite session audit contrôleur, une fois ladite au moins une connexion supplémentaire établie.

11. Passerelle de flux de données selon l'une des revendications 8 à 10, **caractérisée en ce qu'**elle est positionnée de telle sorte que la première interface est connectée à une première passerelle d'entrée au premier réseau d'accès et la deuxième interface est connectée à une deuxième passerelle d'entrée au deuxième réseau d'accès.

12. Terminal d'utilisateur (10) dans un réseau de télécommunications (1) comprenant un premier et un deuxième réseaux d'accès (31, 32) et une passerelle (41) de flux de données comprenant une interface d'entrée (41ₑ) apte à recevoir des flux de données et une première et une deuxième interfaces (41_{S1}, 41_{S2}) de sortie aptes à transmettre lesdits flux respectivement vers le premier et le deuxième réseau d'accès (31, 32), une session audiovisuelle étant en cours, pendant laquelle ledit terminal, attaché audit premier réseau d'accès et apte à s'attacher au deuxième réseau d'accès, reçoit au moins un flux de données constitutif d'un contenu audiovisuel par l'intermédiaire d'une première connexion à ladite première interface de sortie, le contenu audiovisuel étant encodé sous la forme d'une pluralité de flux de données échelonnés comprenant un flux de base et au moins un flux de rehaussement, **caractérisé en ce que** ledit terminal est apte à mettre en oeuvre, lorsqu'il s'est attaché audit deuxième réseau d'accès :
- des moyens de réception d'une commande d'établissement d'une deuxième connexion à ladite deuxième interface (41_{S2}), destinée à permettre un basculement dudit au moins un flux de données de la première vers la deuxième interface, ladite commande comprenant des informations nécessaires à ladite connexion;
- des moyens d'établissement de ladite deuxième connexion à la deuxième interface à l'aide desdites informations;
- des moyens de réception d'instructions relatives à une adaptation de la qualité de la session audiovisuelle en cours sur la deuxième interface, les instructions indiquant un nombre de flux de rehaussement à activer; et
- des moyens d'adaptation de la qualité de la session audiovisuelle en cours.

13. Terminal d'utilisateur selon la revendication 12, **caractérisé en ce que**, le contenu audiovisuel étant encodé sous la forme d'une pluralité de flux de données échelonnés, comprenant au moins un flux de base et un flux de rehaussement, et lesdites instructions relatives à une adaptation de la qualité de la session audiovisuelle en cours comprenant au moins une commande de connexion supplémentaire à ladite deuxième interface (41_{S2}) de ladite passerelle, ladite au moins une connexion supplémentaire étant destinée à transmettre au moins un flux de rehaussement, lesdits moyens d'adaptation de la qualité de la session audiovisuelle sont aptes à déclencher des moyens d'établissement de ladite connexion supplémentaire à ladite deuxième interface de ladite passerelle.

14. Réseau de télécommunications (1) comprenant au moins un premier réseau d'accès (31), un deuxième réseau d'accès (32), une passerelle (41) de flux de données comprenant une interface d'entrée (41ₑ) apte à recevoir des flux de données et une première et une deuxième interfaces (41_{S1}, 41_{S2}) de sortie aptes à transmettre les flux reçus respectivement vers le premier et le deuxième réseaux d'accès et un contrôleur de passerelle (52) apte à contrôler ladite passerelle, une session audiovisuelle étant en cours, pendant laquelle ledit terminal, attaché audit premier réseau d'accès et apte à s'attacher au deuxième réseau d'accès, reçoit au moins un flux de données constitutif d'un contenu audiovisuel par l'intermédiaire d'une première connexion à ladite première interface de sortie de ladite passerelle, le contenu audiovisuel étant encodé sous la forme d'une pluralité de flux de données échelonnés comprenant un flux de base et au moins un flux de rehaussement, ledit réseau est **caractérisé en ce que** ledit contrôleur de passerelle (52) comprend des moyens de :
- réception d'une requête de basculement de ladite session audiovisuelle vers le deuxième réseau d'accès, émise suite à un changement d'un état d'attachement dudit terminal d'utilisateur auxdits premier et deuxième réseaux d'accès;
- envoi à ladite passerelle d'une commande de basculement de ladite session audiovisuelle de ladite première interface vers ladite deuxième interface;
- récupération d'informations liées à un contexte de ladite session audiovisuelle basculée sur la deuxième interface;
- commande d'évaluation d'une adaptation de qualité de ladite session audiovisuelle pouvant être supportée par ladite deuxième interface en fonction desdites informations récupérées ;
- réception d'une réponse de la part dudit serveur de profils de contenus (55), ladite réponse indiquant un nombre de flux de rehaussement à activer,
- demande de mise à jour de la session audiovisuelle auprès dudit serveur de contenus permettant d'assurer ladite adaptation de qualité supportée
- sauvegarde d'informations de contexte relatives aux connexions établies entre ledit terminal d'utilisateur et ladite passerelle de flux de données pour ladite session audiovisuelle pendant une durée prédéterminée.

15. Serveur de profil de contenus (55) dans un réseau de télécommunications (1) comprenant au moins un premier réseau d'accès (31), un deuxième réseau d'accès (32), une passerelle de flux de données (41) comprenant une première et une deuxième interfaces de sortie (41_{S1}, 41_{S2}) aptes à faire transiter des flux de données respectivement vers les premier et deuxième réseaux d'accès et un contrôleur de passerelle (52) apte à contrôler ladite passerelle, une session audiovisuelle étant en cours pendant laquelle au moins un terminal d'utilisateur (10) attaché audit premier réseau d'accès (31) et apte à s'attacher au deuxième réseau d'accès, reçoit d'un serveur de contenus (61) au moins un flux de données constitutif d'un contenu audiovisuel encodé par l'intermédiaire de ladite première interface de sortie (41_{S1}), le contenu audiovisuel étant encodé sous la forme d'une pluralité de flux de données échelonnés et comprenant un flux de base et au moins un flux de rehaussement,, ledit serveur de profil de contenus étant **caractérisé en ce que**,
ledit contrôleur de passerelle comprenant des moyens de :
- réception d'une requête de basculement de session vers le deuxième réseau d'accès, ladite requête de basculement ayant été émise suite à un changement d'un état d'attachement dudit terminal audit deuxième réseau;
- envoi à ladite passerelle d'une commande de basculement de ladite session audiovisuelle de ladite première interface vers ladite deuxième interface;
- récupération d'informations liées à un contexte de ladite session audiovisuelle basculée sur la deuxième interface;
- commande d'évaluation d'une adaptation de qualité de ladite session audiovisuelle pouvant être supportée par ladite deuxième interface en fonction desdites informations récupérées audit serveur de profil de contenus (55);
- réception d'une réponse de la part dudit serveur de profils de contenus (55), ladite réponse indiquant un nombre de flux de rehaussement à activer,
- demande de mise à jour de la session audiovisuelle auprès dudit serveur de contenu permettant d'assurer ladite adaptation de qualité supportée, et
- sauvegarde d'informations de contexte relatives aux connexions établies entre ledit terminal d'utilisateur et ladite passerelle de flux de données pour ladite session audiovisuelle pendant une durée prédéterminée.
ledit serveur de profil de contenus (55) comprend des moyens d'évaluation d'une adaptation de qualité du contenu audiovisuel transmis pouvant être supportée par ladite session audiovisuelle en fonction desdites informations récupérées en réponse à ladite commande d'évaluation et des moyens d'envoi d'une réponse audit contrôleur.

16. Serveur de mobilité dans un réseau de télécommunications, comprenant au moins un premier réseau d'accès, un deuxième réseau d'accès, une passerelle de flux de données comprenant une première et une deuxième interfaces de sortie aptes à faire transiter des flux de données respectivement vers les premier et deuxième réseaux d'accès et un contrôleur de passerelle apte à contrôler ladite passerelle, une session audiovisuelle étant en cours pendant laquelle au moins un terminal d'utilisateur (10) attaché audit premier réseau d'accès (31) et apte à s'attacher audit deuxième réseau d'accès, reçoit d'un serveur de contenus (61) au moins un flux de données constitutif d'un contenu audiovisuel encodé par l'intermédiaire de ladite première interface de sortie (41_{S1}), **caractérisé en ce que** ledit serveur de mobilité est apte à mettre en oeuvre les moyens suivants de :
- réception d'une notification de changement d'un état d'attachement dudit terminal d'utilisateur auxdits premier et deuxième réseaux d'accès, ladite notification comprenant au moins une localisation dudit terminal d'utilisateur et une identification de la session audiovisuelle;
- analyse de ladite notification de changement destinée à déterminer si la session audiovisuelle en cours doit être basculée du premier réseau d'accès vers le deuxième réseau d'accès;
- identification dudit contrôleur de passerelle en charge de contrôler ladite session à partir des informations de localisation et de localisation;
- envoi d'une requête de basculement de session du premier réseau d'accès vers le deuxième réseau d'accès audit contrôleur de passerelle, ledit contrôleur de passerelle comprenant des moyens de :
- réception d'une requête de basculement de session vers le deuxième réseau d'accès, ladite requête de basculement ayant été émise suite à un changement d'un état d'attachement dudit terminal audit deuxième réseau;
- envoi à ladite passerelle d'une commande de basculement de ladite session audiovisuelle de ladite première interface vers ladite deuxième interface;
- récupération d'informations liées à un contexte de ladite session audiovisuelle basculée sur la deuxième interface;
- commande d'évaluation d'une adaptation de qualité de ladite session audiovisuelle pouvant être supportée par ladite deuxième interface en fonction desdites informations récupérées audit serveur de profil de contenus (55);
- réception d'une réponse de la part dudit serveur de profils de contenus (55), ladite réponse indiquant un nombre de flux de rehaussement à activer,
- demande de mise à jour de la session audiovisuelle auprès dudit serveur de contenu permettant d'assurer ladite adaptation de qualité supportée, et
- sauvegarde d'informations de contexte relatives aux connexions établies entre ledit terminal d'utilisateur et ladite passerelle de flux de données pour ladite session audiovisuelle pendant une durée prédéterminée, ledit serveur de profil de contenus (55) comprend des moyens d'évaluation d'une adaptation de qualité du contenu audiovisuel transmis pouvant être supportée par ladite session audiovisuelle en fonction desdites informations récupérées en réponse à ladite commande d'évaluation et des moyens d'envoi d'une réponse audit contrôleur.

17. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé selon les revendications 1 à 6.

## Patentansprüche

1. Verfahren für ein audiovisuelles Sitzungs-Handover in einem Telekommunikationsnetzwerk (1), umfassend mindestens ein erstes Zugangsnetz (31) und ein zweites Zugangsnetz (32), wobei eine audiovisuelle Sitzung in Gang ist, während der mindestens ein Benutzerendgerät (10), das an das erste Zugangsnetz angeschlossen und geeignet ist, sich an das zweite Zugangsnetz anzuschließen, von einem Inhaltsserver (61) mindestens einen Datenstrom, der einen audiovisuellen Inhalt bildet, über ein Datenstrom-Gateway (41) empfängt, umfassend eine erste Schnittstelle (41_{S1}) zu dem ersten Zugangsnetz und eine zweite Ausgangsschnittstelle (41_{S2}) zu dem zweiten Zugangsnetz, wobei der audiovisuelle Inhalt in Form einer Vielzahl von abgestuften Datenströmen codiert ist, umfassend einen Basisstrom und mindestens einen Erhöhungsstrom, wobei das Verfahren **dadurch gekennzeichnet ist, dass**, wenn sich das Endgerät an das zweite Zugangsnetz angeschlossen hat, das Verfahren die folgenden Schritte umfasst:
- Empfang einer Anfrage nach einem Sitzungs-Handover an das zweite Zugangsnetz, wobei die Handover-Anfrage nach einer Änderung eines Anschlusszustands des Endgeräts an das zweite Netz gesandt wurde;
- Steuerung eines Handovers der audiovisuellen Sitzung am Datenstrom-Gateway von der ersten Ausgangsschnittstelle zu der zweiten Ausgangsschnittstelle;
- Wiedergewinnung von Informationen, die mit einem Kontext der audiovisuellen Sitzung, die auf die zweite Schnittstelle umgeschaltet wurde, verbunden sind;
- Steuerung einer Bewertung an einem Inhaltsprofilserver (55) einer Qualitätsanpassung des übertragenen audiovisuellen Inhalts, die von der zweiten Schnittstelle für die audiovisuelle Sitzung in Abhängigkeit von den wiedergewonnenen Informationen unterstützt werden kann;
- Empfang einer Antwort von dem Inhaltsprofilserver (55) und Anfrage nach Aktualisierung des bei der audiovisuellen Sitzung an den Inhaltsserver (61) gesandten Datenstroms, um die bewertete Qualitätsanpassung zu gewährleisten, wobei die Antwort des Inhaltsprofilservers (55) eine Anzahl von zu aktivierenden Erhöhungsströmen angibt,
- Speichern von Kontextinformationen in Zusammenhang mit den zwischen dem Benutzerendgerät und dem Datenstrom-Gateway hergestellten Anschlüssen für die audiovisuelle Sitzung während einer vorbestimmten Dauer.

2. Verfahren für ein audiovisuelles Sitzungs-Handover nach Anspruch 1, **dadurch gekennzeichnet, dass** es vor dem Schritt der Steuerung eines Handovers die folgenden Schritte umfasst:
- Senden an das Benutzerendgerät (10) eines Befehls zur Herstellung eines Anschlusses an die zweite Schnittstelle (41_{S2}), wobei der Befehl die für den Anschluss notwendigen Informationen umfasst;
- Senden an das Datenstrom-Gateway einer Sendemitteilung eines Anschlussbefehls an das Endgerät, umfassend Informationen in Zusammenhang mit der Sitzung und dem Endgerät.

3. Verfahren für ein audiovisuelles Sitzungs-Handover nach Anspruch 1, **dadurch gekennzeichnet, dass** es nach dem Schritt der Steuerung eines Handovers und vor dem Schritt der Steuerung einer Aktualisierung des Datenstroms einen Schritt des Empfangs einer Mitteilung von dem Gateway umfasst, die anzeigt, dass das Handover des Datenstroms durchgeführt wurde.

4. Verfahren für ein audiovisuelles Sitzungs-Handover nach einem der Ansprüche 1 bis 3, **dadurch gekennzeichnet, dass** die wiedergewonnenen Kontextinformationen mindestens eine Information unter den folgenden Informationen umfassen:
- eine Information zu einem Profil des Benutzers;
- eine Information zu Ressourcen einer zweiten Zugangsverbindung, die sich zwischen der zweiten Schnittstelle und dem Benutzerendgerät befindet, wenn dieses letztgenannte an das zweite Zugangsnetz angeschlossen ist;
- eine Information zu Kapazitäten des Benutzerendgeräts; und
- eine Information zu Codierungsmerkmalen des audiovisuellen Inhalts durch den Inhaltsserver.

5. Verfahren für ein audiovisuelles Sitzungs-Handover nach einem der Ansprüche 1 bis 4, **dadurch gekennzeichnet, dass** das Verfahren die folgenden Schritte umfasst:
- Steuerung des Sendens des mindestens Erhöhungsstroms an den Inhaltsserver (61),
- Empfang einer Mitteilung von dem Gateway, die den Empfang des mindestens einen Erhöhungsstroms an seiner Eingangsschnittstelle (41ₑ) bestätigt,
- Senden an das Benutzerendgerät einer Steuerung eines zusätzlichen Anschlusses an die zweite Schnittstelle (41_{S2}) des Gateways, der dazu bestimmt ist, den Erhöhungsstrom zu befördern, wobei die Steuerung Informationen zu dem zusätzlichen Anschluss umfasst;
- Senden an das Gateway einer Mitteilung, die angibt, dass der mindestens eine empfangene Erhöhungsstrom für den zusätzlichen Anschluss bestimmt ist; und
- Empfang einer Inbetriebnahmebestätigung des zusätzlichen Anschlusses für die Übertragung des mindestens einen Erhöhungsstroms.

6. Verfahren für ein audiovisuelles Sitzungs-Handover nach einem der Ansprüche 1 bis 5, **dadurch gekennzeichnet, dass**, wenn ein zusätzlicher Anschluss mit der ersten Schnittstelle des Gateways hergestellt wurde, um einen Erhöhungsstrom zu übertragen, das Verfahren nach dem Empfangsschritt einer Handover-Anfrage an das zweite Zugangsnetz durch das Benutzerendgerät einen Schritt der Trennung des zusätzlichen Anschlusses umfasst.

7. Kontroller eines Gateways von audiovisuellen Datenströmen in einem Telekommunikationsnetzwerk, umfassend ein erstes Zugangsnetz, ein zweites Zugangsnetz und ein Datenstrom-Gateway, umfassend eine Eingangsschnittstelle, die geeignet ist, Datenströme zu empfangen, und eine erste und eine zweite Ausgangsschnittstelle, die geeignet sind, die Ströme zu dem ersten und dem zweiten Zugangsnetz zu übertragen, wobei eine audiovisuelle Sitzung in Gang ist, während der ein Benutzerendgerät, das an das erste Zugangsnetz angeschlossen und geeignet ist, sich an das zweite Zugangsnetz anzuschließen, von einem Inhaltsserver mindestens einen Datenstrom, der einen audiovisuellen Inhalt bildet, über die erste Schnittstelle empfängt, wobei der audiovisuelle Inhalt in Form einer Vielzahl von abgestuften Datenströmen codiert ist, umfassend einen Basisstrom und mindestens einen Erhöhungsstrom, **dadurch gekennzeichnet, dass** der Kontroller Mittel umfasst für:
- den Empfang einer Anfrage nach einem Sitzungs-Handover an das zweite Zugangsnetz, die nach einer Änderung eines Anschlusszustands des Benutzerendgeräts an das erste und das zweite Netz gesandt wurde;
- das Senden an das Gateway einer Steuerung eines Handovers der audiovisuellen Sitzung von der ersten Schnittstelle zu der zweiten Schnittstelle;
- die Wiedergewinnung von Informationen, die mit einem Kontext der audiovisuellen Sitzung, die auf die zweite Schnittstelle umgeschaltet wurde, verbunden sind;
- die Steuerung einer Bewertung einer Qualitätsanpassung der audiovisuellen Sitzung, die von der zweiten Schnittstelle in Abhängigkeit von den wiedergewonnenen Informationen unterstützt werden kann;
- den Empfang einer Antwort von dem Inhaltsprofilserver (55) und Antwort, die eine Anzahl von zu aktivierenden Erhöhungsströmen angibt,
- die Anfrage nach einer Aktualisierung der audiovisuellen Sitzung bei dem Inhaltsserver, die es ermöglicht, die Anpassung der unterstützten Qualität zu gewährleisten, und
- das Speichern von Kontextinformationen in Zusammenhang mit den zwischen dem Benutzerendgerät und dem Datenstrom-Gateway hergestellten Anschlüssen für die audiovisuelle Sitzung während einer vorbestimmten Dauer.

8. Datenstrom-Gateway (41) in einem Telekommunikationsnetzwerk, umfassend ein erstes Zugangsnetz und ein zweites Zugangsnetz, wobei das Gateway eine Eingangsschnittstelle, die geeignet ist, mindestens einen Datenstrom, der von einem Inhaltsserver (61) gesandt wird, zu empfangen, und erste und zweite Ausgangsschnittstellen umfasst, die geeignet sind, den mindestens einen empfangenen Datenstrom zu dem ersten bzw. dem zweiten Zugangsnetz zu übertragen, wobei eine audiovisuelle Sitzung in Gang ist, während der ein Benutzerendgerät, das an das erste Zugangsnetz angeschlossen und geeignet ist, sich an das zweite Zugangsnetz anzuschließen, mindestens einen Datenstrom, der einen audiovisuellen Inhalt bildet, der mit Hilfe der ersten Ausgangsschnittstelle codiert wird, empfängt, wobei der audiovisuelle Inhalt in Form einer Vielzahl von abgestuften Datenströmen codiert ist, umfassend einen Basisstrom und mindestens einen Erhöhungsstrom, das Gateway **dadurch gekennzeichnet ist, dass** es umfasst:
- Mittel für den Empfang einer Anfrage nach einem audiovisuellen Sitzungs-Handover von der ersten zu der zweiten Schnittstelle, die nach einer Änderung eines Anschlusszustands des Benutzerendgeräts an das erste und das zweite Netz gesandt wurde;
- Mittel zum Handover des audiovisuellen Inhalts von der ersten Schnittstelle zu der zweiten Schnittstelle während der Übertragung;
- Mittel für den Empfang einer Mitteilung zur Anpassung der Qualität der audiovisuellen Sitzung durch den Inhaltsserver (61); und
- Mittel zur Aktualisierung der zweiten Ausgangsschnittstelle (41_{S2}), die geeignet sind, die Qualitätsanpassung einzusetzen.

9. Gateway von audiovisuellen Strömen nach Anspruch 8, **dadurch gekennzeichnet, dass** es Mittel für den Empfang einer Mitteilung zum Senden einer Anschlusssteuerung an die zweite Schnittstelle an das Endgerät durch den Kontroller umfasst, dass es geeignet ist, die Handover-Mittel nach Empfang der Mitteilung einzusetzen, und dass es geeignet ist, Mittel zum Senden einer Handover-Bestätigung an den Kontroller einzusetzen, wenn der Anschluss mit dem Endgerät hergestellt ist.

10. Datenstrom-Gateway nach einem der Ansprüche 8 und 9, **dadurch gekennzeichnet, dass**, wobei der audiovisuelle Inhalt in Form einer Vielzahl von abgestuften Datenströmen codiert ist, umfassend mindestens einen Basisdatenstrom und mindestens einen Erhöhungsstrom, die Aktualisierungsmitteilung eine Anzahl von Erhöhungsdatenströmen angibt, deren Übertragung aktiviert werden muss, dass die Aktualisierungsmittel der zweiten Schnittstelle Mittel zur Herstellung mindestens eines zusätzlichen Anschlusses mit dem Benutzerendgerät umfassen, um den mindestens einen Erhöhungsstrom zu befördern, und dass das Gateway Mittel zum Senden einer Aktualisierungsbestätigung der Sitzung an den Kontroller umfasst, wenn der mindestens eine zusätzliche Anschluss hergestellt ist.

11. Datenstrom-Gateway nach einem der Ansprüche 8 bis 10, **dadurch gekennzeichnet, dass** es derart positioniert ist, dass die erste Schnittstelle an ein erstes Eingangsgateway am ersten Zugangsnetz und die zweite Schnittstelle an ein zweites Eingangsgateway am zweiten Zugangsnetz angeschlossen ist.

12. Benutzerendgerät (10) in einem Telekommunikationsnetzwerk (1), umfassend ein erstes und ein zweites Zugangsnetz (31, 32) und ein Datenstrom-Gateway (41), umfassend eine Eingangsschnittstelle (41ₑ), die geeignet ist, Datenströme zu empfangen, und eine erste und eine zweite Ausgangschnittstelle (41_{S1}, 41_{S2}), die geeignet sind, die Ströme zu dem ersten bzw. dem zweiten Zugangsnetz (31, 32) zu übertragen, wobei eine audiovisuelle Sitzung in Gang ist, während der ein Benutzerendgerät, das an das erste Zugangsnetz angeschlossen und geeignet ist, sich an das zweite Zugangsnetz anzuschließen, mindestens einen Datenstrom, der einen audiovisuellen Inhalt bildet, über einen ersten Anschluss an die erste Ausgangsschnittstelle empfängt, wobei der audiovisuelle Inhalt in Form einer Vielzahl von abgestuften Datenströmen codiert ist, umfassend einen Basisstrom und mindestens einen Erhöhungsstrom, **dadurch gekennzeichnet, dass** das Endgerät, wenn es an das zweite Zugangsnetz angeschlossen ist, geeignet ist einzusetzen:
- Mittel für den Empfang einer Steuerung der Herstellung eines zweiten Anschlusses an die zweite Schnittstelle (41_{S2}), die dazu bestimmt ist ein Handover des mindestens einen Datenstroms von der ersten zu der zweiten Schnittstelle zu ermöglichen, wobei die Steuerung für den Anschluss notwendige Informationen umfasst;
- Mittel zur Herstellung des zweiten Anschlusses an die zweite Schnittstelle mit Hilfe der Informationen;
- Mittel für den Empfang von Anweisungen zu einer Anpassung der Qualität der in Gang befindlichen audiovisuellen Sitzung an der zweiten Schnittstelle, wobei die Anweisungen eine Anzahl von zu aktivierenden Erhöhungsströme angeben; und
- Mittel zur Anpassung der Qualität der in Gang befindlichen audiovisuellen Sitzung.

13. Benutzerendgerät nach Anspruch 12, **dadurch gekennzeichnet, dass**, wobei der audiovisuelle Inhalt in Form einer Vielzahl von abgestuften Datenströmen codiert ist, umfassend mindestens einen Basisstrom und einen Erhöhungsstrom, und wobei die Anweisungen zu einer Anpassung der Qualität der in Gang befindlichen audiovisuellen Sitzung mindestens eine Steuerung eines zusätzlichen Anschlusses an die zweite Schnittstelle (41_{S2}) des Gateways umfassen, wobei der mindestens eine zusätzliche Anschluss dazu bestimmt ist, mindestens einen Erhöhungsstrom zu übertragen, die Mittel zur Anpassung der Qualität der audiovisuellen Sitzung geeignet sind, Mittel zur Herstellung des zusätzlichen Anschlusses an die zweite Schnittstelle des Gateways auszulösen.

14. Telekommunikationsnetzwerk (1) umfassend mindestens ein erstes Zugangsnetz (31), ein zweites Zugangsnetz (32), ein Datenstrom-Gateway (41), umfassend eine Eingangsschnittstelle (41ₑ), die geeignet ist, Datenströme zu empfangen, und eine erste und eine zweite Ausgangsschnittstelle (41_{S1}, 41_{S2}), die geeignet sind, die Ströme zu dem ersten und dem zweiten Zugangsnetz zu übertragen, und einen Gateway-Kontroller (52), der geeignet ist, das Gateway zu kontrollieren, wobei eine audiovisuelle Sitzung in Gang ist, während der das Endgerät, das an das erste Zugangsnetz angeschlossen und geeignet ist, sich an das zweite Zugangsnetz anzuschließen, mindestens einen Datenstrom, der einen audiovisuellen Inhalt bildet, über die erste Ausgangsschnittstelle empfängt, wobei der audiovisuelle Inhalt in Form einer Vielzahl von abgestuften Datenströmen codiert ist, umfassend einen Basisstrom und mindestens einen Erhöhungsstrom, das Netzwerk **dadurch gekennzeichnet ist, dass** der Gateway-Kontroller (52) Mittel umfasst für:
- den Empfang einer Anfrage nach einem Sitzungs-Handover an das zweite Zugangsnetz, die nach einer Änderung eines Anschlusszustands des Benutzerendgeräts an das erste und das zweite Netz gesandt wurde;
- das Senden an das Gateway einer Steuerung eines Handovers der audiovisuellen Sitzung von der ersten Schnittstelle zu der zweiten Schnittstelle;
- die Wiedergewinnung von Informationen, die mit einem Kontext der audiovisuellen Sitzung, die auf die zweite Schnittstelle umgeschaltet wurde, verbunden sind;
- die Steuerung einer Bewertung einer Qualitätsanpassung der audiovisuellen Sitzung, die von der zweiten Schnittstelle in Abhängigkeit von den wiedergewonnenen Informationen unterstützt werden kann;
- den Empfang einer Antwort von dem Inhaltsprofilserver (55) und Antwort, die eine Anzahl von zu aktivierenden Erhöhungsströmen angibt,
- die Anfrage nach einer Aktualisierung der audiovisuellen Sitzung bei dem Inhaltsserver, die es ermöglicht, die Anpassung der unterstützten Qualität zu gewährleisten, und
- das Speichern von Kontextinformationen in Zusammenhang mit den zwischen dem Benutzerendgerät und dem Datenstrom-Gateway hergestellten Anschlüssen für die audiovisuelle Sitzung während einer vorbestimmten Dauer.

15. Inhaltsprofilserver (55) in einem Telekommunikationsnetzwerk (1), umfassend mindestens ein erstes Zugangsnetz (31), ein zweites Zugangsnetz (32), ein Datenstrom-Gateway (41), umfassend eine Ausgangsschnittstelle (41_{S1}, 41_{S2}), die geeignet sind, Datenströme zu dem ersten und dem zweiten Zugangsnetz zu übergehen zu lassen, und einen Gateway-Kontroller (52), der geeignet ist, das Gateway zu kontrollieren, wobei eine audiovisuelle Sitzung in Gang ist, während der mindestens ein Benutzerendgerät (10), das an das erste Zugangsnetz (31) angeschlossen und geeignet ist, sich an das zweite Zugangsnetz anzuschließen, von einem Inhaltsserver (61) mindestens einen Datenstrom, der einen codierten audiovisuellen Inhalt bildet, über die erste Ausgangsschnittstelle (41_{S1}) empfängt, wobei der audiovisuelle Inhalt in Form einer Vielzahl von abgestuften Datenströmen codiert ist, umfassend einen Basisstrom und mindestens einen Erhöhungsstrom, wobei der Inhaltsprofilserver **dadurch gekennzeichnet ist, dass** der Gateway-Kontroller Mittel umfasst für:
- den Empfang einer Anfrage nach einem Sitzungs-Handover an das zweite Zugangsnetz, die nach einer Änderung eines Anschlusszustands des Benutzerendgeräts an das erste und das zweite Netz gesandt wurde;
- das Senden an das Gateway einer Steuerung eines Handovers der audiovisuellen Sitzung von der ersten Schnittstelle zu der zweiten Schnittstelle;
- die Wiedergewinnung von Informationen, die mit einem Kontext der audiovisuellen Sitzung, die auf die zweite Schnittstelle umgeschaltet wurde, verbunden sind;
- die Steuerung einer Bewertung einer Qualitätsanpassung der audiovisuellen Sitzung, die von der zweiten Schnittstelle in Abhängigkeit von den wiedergewonnenen Informationen am Inhaltsprofilserver (55) unterstützt werden kann;
- den Empfang einer Antwort von dem Inhaltsprofilserver (55) und Antwort, die eine Anzahl von zu aktivierenden Erhöhungsströmen angibt,
- die Anfrage nach einer Aktualisierung der audiovisuellen Sitzung bei dem Inhaltsserver, die es ermöglicht, die Anpassung der unterstützten Qualität zu gewährleisten, und
- das Speichern von Kontextinformationen in Zusammenhang mit den zwischen dem Benutzerendgerät und dem Datenstrom-Gateway hergestellten Anschlüssen für die audiovisuelle Sitzung während einer vorbestimmten Dauer,
wobei der Inhaltsprofilserver (55) Mittel zur Bewertung einer Qualitätsanpassung des übertragenen audiovisuellen Inhalts, die von der audiovisuellen Sitzung in Abhängigkeit von den wiedergewonnenen Informationen als Antwort auf die Bewertungssteuerung unterstützt werden kann, und Mittel zum Senden einer Antwort an den Kontroller umfasst.

16. Mobilitätsserver in einem Telekommunikationsnetzwerk, umfassend mindestens ein erstes Zugangsnetz, ein zweites Zugangsnetz, ein Datenstrom-Gateway, umfassend eine erste und eine zweite Ausgangsschnittstelle, die geeignet sind, Datenströme zu dem ersten bzw. dem zweiten Zugangsnetz zu übergehen zu lassen, und einen Gateway-Kontroller, der geeignet ist, das Gateway zu kontrollieren, wobei eine audiovisuelle Sitzung in Gang ist, während der mindestens ein Benutzerendgerät (10), das an das erste Zugangsnetz (31) angeschlossen und geeignet ist, sich an das zweite Zugangsnetz anzuschließen, von einem Inhaltsserver (61) mindestens einen Datenstrom, der einen audiovisuellen Inhalt bildet, über die erste Ausgangsschnittstelle (41_{S1}) empfängt, **dadurch gekennzeichnet ist, dass** der Mobilitätsserver geeignet ist, die folgenden Mittel einzusetzen für:
- den Empfang einer Mitteilung der Änderung eines Anschlusszustands des Benutzerendgeräts an die ersten und zweiten Zugangsnetze, wobei die Mitteilung mindestens eine Lokalisierung des Benutzerendgeräts und eine Identifizierung der audiovisuellen Sitzung umfasst,
- die Analyse der Änderungsmitteilung, die dazu bestimmt ist, festzustellen, ob die in Gang befindliche audiovisuelle Sitzung von dem ersten Zugangsnetz zu dem zweiten Zugangsnetz umgeschaltet werden soll;
- die Identifizierung des Gateway-Kontrollers, der die Aufgabe hat, die Sitzung auf Basis der Lokalisierungs- und der Lokalisierungsinformationen zu kontrollieren;
- das Senden einer Anfrage nach einem Sitzungs-Handover von dem ersten Zugangsnetz zu dem zweiten Zugangsnetz am Gateway-Kontroller, wobei der Gateway-Kontroller Mittel umfasst für:
- den Empfang einer Anfrage nach einem Sitzungs-Handover an das zweite Zugangsnetz, wobei die Handover-Anfrage nach einer Änderung eines Anschlusszustands des Endgeräts an das zweite Netz gesandt wurde;
- das Senden an das Gateway einer Steuerung eines Handovers der audiovisuellen Sitzung von der ersten Schnittstelle zu der zweiten Schnittstelle;
- die Wiedergewinnung von Informationen, die mit einem Kontext der audiovisuellen Sitzung, die auf die zweite Schnittstelle umgeschaltet wurde, verbunden sind;
- die Steuerung einer Bewertung einer Qualitätsanpassung der audiovisuellen Sitzung, die von der zweiten Schnittstelle in Abhängigkeit von den wiedergewonnenen Informationen am Inhaltsprofilserver (55) unterstützt werden kann;
- den Empfang einer Antwort von dem Inhaltsprofilserver (55), wobei die Antwort eine Anzahl von zu aktivierenden Erhöhungsströmen angibt,
- die Anfrage nach einer Aktualisierung der audiovisuellen Sitzung bei dem Inhaltsserver, die es ermöglicht, die Anpassung der unterstützten Qualität zu gewährleisten, und
- das Speichern von Kontextinformationen in Zusammenhang mit den zwischen dem Benutzerendgerät und dem Datenstrom-Gateway hergestellten Anschlüssen für die audiovisuelle Sitzung während einer vorbestimmten Dauer, wobei der Inhaltsprofilserver (55) Mittel zur Bewertung einer Qualitätsanpassung des übertragenen audiovisuellen Inhalts, die von der audiovisuellen Sitzung in Abhängigkeit von den wiedergewonnenen Informationen als Antwort auf die Bewertungssteuerung unterstützt werden kann, und Mittel zum Senden einer Antwort an den Kontroller umfasst.

17. Computerprogrammprodukt, das von einem Kommunikationsnetzwerk heruntergeladen und/oder auf einem von einem Computer lesbaren Träger gespeichert und/oder von einem Mikroprozessor ausgeführt werden kann, **dadurch gekennzeichnet, dass** es Programmcodeanweisungen für die Ausführung des Verfahrens nach den Ansprüchen 1 bis 6 umfasst.

## Claims

1. Method of switching over an audiovisual session in a telecommunications network (1) comprising at least one first access network (31) and one second access network (32), an audiovisual session being in progress, during which at least one user terminal (10) attached to said first access network and able to attach itself to said second access network receives from a contents server (61) at least one constituent data stream of an audiovisual content by way of a data stream gateway (41) comprising a first interface (41_{S1}) to said first access network and a second output interface (41_{S2}) to said second access network, the audiovisual content being encoded in the form of a plurality of scaled data streams comprising a basic stream and at least one enhancement stream, said method being **characterized in that**, when said terminal has attached itself to said second access network, said method comprises the following steps of:
- receiving a request for session switchover to the second access network, said switchover request having been emitted following a change of a state of attachment of said terminal to said second network;
- ordering switchover of said audiovisual session at said data stream gateway from the first output interface to the second output interface;
- recovering information related to a context of said audiovisual session switched over to the second interface;
- ordering evaluation at a contents profiles server (55) of an adaptation of quality, that can be supported by said second interface, of the audiovisual content transmitted for said audiovisual session as a function of said information recovered;
- receiving a response on the part of said contents profiles server (55) and requesting updating of said data stream emitted during said audiovisual session to the contents server (61) so as to ensure said evaluated adaptation of quality said response of said contents profile server (55) indicating a number of enhancement streams to be activated,
- saving context information relating to the connections established between said user terminal and said data stream gateway in respect of said audiovisual session for a predetermined duration.

2. Method of switching over an audiovisual session according to Claim 1, **characterized in that** it comprises, prior to the step of ordering switchover, the following steps:
- sending said user terminal (10) a command to establish connection to said second interface (41_{S2}), said command comprising information required for said connection;
- sending the data stream gateway a notification of sending of command for connection to the terminal, comprising information relating to said session and to said terminal.

3. Method of switching over an audiovisual session according to Claim 1, **characterized in that** it comprises, following the step of ordering switchover and prior to the step of requesting updating of said data stream, a step of receiving a notification on the part of said gateway indicating that the switchover of said data stream has been performed.

4. Method of switching over an audiovisual session according to any one of Claims 1 to 3, **characterized in that** said recovered context information comprises at least one information item from among the following information:
- an information item relating to a profile of said user;
- an information item relating to resources of a second access link situated between said second interface and the user terminal when the latter is attached to the second access network;
- an information item relating to capabilities of said user terminal; and
- an information item relating to characteristics of encoding of the audiovisual content by the contents server.

5. Method of switching over an audiovisual session according to one of Claims 1 to 4, **characterized in that** said method comprises the following steps:
- ordering emission of said at least enhancement stream to the contents server (61);
- receiving a notification by the gateway confirming the receipt of said at least one enhancement stream on its input interface (41ₑ);
- sending the user terminal a command for additional connection to said second interface (41_{S2}) of said gateway intended to carry said enhancement stream, said command comprising information relating to said additional connection;
- sending the gateway a notification indicating that said at least one enhancement stream received is intended for said additional connection; and
- receiving a confirmation of enabling of the additional connection for the transmission of said at least one enhancement stream.
saving context information relating to the connections established between said user terminal and said data stream gateway in respect of said audiovisual session for a predetermined duration.

6. Method of switching over an audiovisual session according to any one of Claims 1 to 5, **characterized in that**, when an additional connection has been established with the first interface of said gateway so as to transmit an enhancement stream, said method comprises, following the step of receiving a request for switching over to said second access network by said user terminal, a step of disconnecting said additional connection.

7. Audiovisual data stream gateway controller in a telecommunications network comprising a first access network, a second access network and a data stream gateway comprising an input interface able to receive data streams and a first and a second output interface able to transmit said streams respectively to the first and the second access network, an audiovisual session being in progress during which a user terminal attached to said first access network and able to attach itself to said second access network receives from a contents server at least one constituent data stream of an audiovisual content by way of said first interface, the audiovisual content being encoded in the form of a plurality of scaled data streams and comprising a basic stream and at least one enhancement stream, **characterized in that** said controller comprises means for:
- receiving a request for switchover of said audiovisual session to the second access network, emitted following a change of a state of attachment of said user terminal to said first and second access networks;
- sending said gateway a command for switchover of said audiovisual session from said first interface to said second interface;
- recovering information related to a context of said audiovisual session switched over to the second interface;
- ordering evaluation of an adaptation of quality of said audiovisual session that can be supported by said second interface as a function of said information recovered;
- receiving a response from said contents profile server (55), said response indicating a number of enhancement streams to be activated,
- requesting updating, by said contents server, of the audiovisual session making it possible to ensure said supported adaptation of quality, and
- saving context information relating to the connections established between said user terminal and said data stream gateway in respect of said audiovisual session for a predetermined duration.

8. Data stream gateway (41) in a telecommunications network comprising at least one first access network and one second access network, said gateway comprising an input interface able to receive at least one data stream emitted by a contents server (61) and first and second output interfaces able to transmit said at least one data stream received respectively to said first and second access network, an audiovisual session being in progress during which at least one user terminal attached to said first access network and able to attach itself to said second access network receives at least one constituent data stream of an audiovisual content encoded by way of said first output interface, the audiovisual content being encoded in the form of a plurality of scaled data streams comprising a basic stream and at least one enhancement stream, said gateway is **characterized in that** it comprises:
- means for receiving a command for switchover of said audiovisual session from the first to the second interface, emitted following a change of a state of attachment of said user terminal to said first and second access networks;
- means for switching over the audiovisual content from the first interface to the second interface when transmission is in progress;
- means for receiving a notification of adaptation of quality of said audiovisual session by said contents server (61); and
- means for updating said second output interface (41_{S2}) which are able to implement said adaptation of quality.

9. Gateway for audiovisual streams according to Claim 8, **characterized in that** it comprises means for receiving a notification of sending of command for connection to said second interface to the terminal by said controller, **in that** it is able to implement said switchover means after receiving said notification, and **in that** it is able to implement means for sending a confirmation of switchover to said controller, once said connection has been established with the terminal.

10. Data stream gateway according to one of Claims 8 and 9, **characterized in that**, the audiovisual content being encoded in the form of a plurality of scaled data streams, comprising at least one basic data stream and at least one enhancement stream, said notification of updating indicates a number of enhancement data streams whose transmission must be activated, **in that** said means for updating the second interface comprise means for establishing at least one additional connection with said user terminal so as to carry said at least one enhancement stream and **in that** said gateway comprises means for sending a confirmation of updating of said session to said controller, once said at least one additional connection has been established.

11. Data stream gateway according to one of Claims 8 to 10, **characterized in that** it is positioned in such a way that the first interface is connected to a first input gateway to the first access network and the second interface is connected to a second input gateway to the second access network.

12. User terminal (10) in a telecommunications network (1) comprising a first and a second access network (31, 32) and a data stream gateway (41) comprising an input interface (41ₑ) able to receive data streams and a first and a second output interface (41_{S1}, 41_{S2})able to transmit said streams respectively to the first and the second access network (31, 32), an audiovisual session being in progress, during which said terminal, attached to said first access network and able to attach itself to the second access network, receives at least one constituent data stream of an audiovisual content by way of a first connection to said first output interface, the audiovisual content being encoded in the form of a plurality of scaled data streams comprising a basic stream and at least one enhancement stream, **characterized in that** said terminal is able to implement, when it has attached itself to said second access network:
- means for receiving a command for establishing a second connection to said second interface (41_{S2}), intended to allow switchover of said at least one data stream from the first to the second interface, said command comprising information required for said connection;
- means for establishing said second connection to the second interface with the aid of said information;
- means for receiving instructions relating to an adaptation of the quality of the audiovisual session in progress on the second interface, the instructions indicating a number enhancement streams to be activated; and
- means for adapting the quality of the audiovisual session in progress.

13. User terminal according to Claim 12, **characterized in that**, the audiovisual content being encoded in the form of a plurality of scaled data streams, comprising at least one basic stream and one enhancement stream, and said instructions relating to an adaptation of the quality of the audiovisual session in progress comprising at least one command for additional connection to said second interface (41_{S2}) of said gateway, said at least one additional connection being intended to transmit at least one enhancement stream, said means for adapting the quality of the audiovisual session are able to trigger means for establishing said additional connection to said second interface of said gateway.

14. Telecommunications network (1) comprising at least one first access network (31), one second access network (32), a data stream gateway (41) comprising an input interface (41ₑ) able to receive data streams and a first and a second output interface (41_{S1}, 41_{S2})able to transmit the streams received respectively to the first and the second access networks and a gateway controller (52) able to control said gateway, an audiovisual session being in progress, during which said terminal, attached to said first access network and able to attach itself to the second access network, receives at least one constituent data stream of an audiovisual content by way of a first connection to said first output interface of said gateway, the audiovisual content being encoded in the form of a plurality of scaled data streams comprising a basic stream and at least one enhancement stream, said network is **characterized in that** said gateway controller (52) comprises means for:
- receiving a request for switchover of said audiovisual session to the second access network, emitted following a change of a state of attachment of said user terminal to said first and second access networks;
- sending said gateway a command for switchover of said audiovisual session from said first interface to said second interface;
- recovering information related to a context of said audiovisual session switched over to the second interface;
- ordering evaluation of an adaptation of quality of said audiovisual session that can be supported by said second interface as a function of said information recovered;
- receiving a response from said contents profile server (55), said response indicating a number of enhancement streams to be activated,
- requesting updating, by said contents server, of the audiovisual session making it possible to ensure said supported adaptation of quality,
- saving context information relating to the connections established between said user terminal and said data stream gateway in respect of said audiovisual session for a predetermined duration.

15. Contents profile server (55) in a telecommunications network (1) comprising at least one first access network (31), one second access network (32), a data stream gateway (41) comprising a first and a second output interface (41_{S1}, 41_{S2}) able to pass data streams respectively to the first and second access networks and a gateway controller (52) able to control said gateway, an audiovisual session being in progress during which at least one user terminal (10) attached to said first access network (31) and able to attach itself to the second access network receives from a contents server (61) at least one constituent data stream of an audiovisual content encoded by way of said first output interface (41_{S1}, the audiovisual content being encoded in the form of a plurality of scaled data streams and comprising a basic stream and at least one enhancement stream, said contents profile server being **characterized in that**,
said gateway controller comprising means for:
- receiving a request for session switchover to the second access network, said switchover request having been emitted following a change of a state of attachment of said terminal to said second network;
- sending said gateway a command for switchover of said audiovisual session from said first interface to said second interface;
- recovering information related to a context of said audiovisual session switched over to the second interface;
- ordering evaluation of an adaptation of quality of said audiovisual session that can be supported by said second interface as a function of said information recovered at said contents profile server (55) ;
- receiving a response from said contents profile server (55), said response indicating a number of enhancement streams to be activated,
- requesting updating, by said content server, of the audiovisual session making it possible to ensure said supported adaptation of quality, and
- saving context information relating to the connections established between said user terminal and said data stream gateway in respect of said audiovisual session for a predetermined duration.
said contents profile server (55) comprises means for evaluating an adaptation of quality, that can be supported by said audiovisual session, of the audiovisual content transmitted as a function of said information recovered in response to said evaluation command and means for sending a response to said controller.

16. Mobility server in a telecommunications network, comprising at least one first access network, one second access network, a data stream gateway comprising a first and a second output interface able to pass data streams respectively to the first and second access networks and a gateway controller able to control said gateway, an audiovisual session being in progress during which at least one user terminal (10) attached to said first access network (31) and able to attach itself to said second access network receives from a contents server (61) at least one constituent data stream of an audiovisual content encoded by way of said first output interface (41_{S1}), **characterized in that** said mobility server is able to implement the following means for:
- receiving a notification of change of a state of attachment of said user terminal to said first and second access networks, said notification comprising at least one location of said user terminal and an identification of the audiovisual session;
- analyzing said notification of change, intended to determine whether the audiovisual session in progress must be switched over from the first access network to the second access network;
- identifying said gateway controller in charge of controlling said session on the basis of the location and location information;
- sending a request for session switchover from the first access network to the second access network to said gateway controller, said gateway controller comprising means for:
- receiving a request for session switchover to the second access network, said switchover request having been emitted following a change of a state of attachment of said terminal to said second network;
- sending said gateway a command for switchover of said audiovisual session from said first interface to said second interface;
- recovering information related to a context of said audiovisual session switched over to the second interface;
- ordering evaluation of an adaptation of quality of said audiovisual session that can be supported by said second interface as a function of said information recovered at said contents profile server (55) ;
- receiving a response from said contents profile server (55), said response indicating a number of enhancement streams to be activated,
- requesting updating, by said content server, of the audiovisual session making it possible to ensure said supported adaptation of quality, and
- saving context information relating to the connections established between said user terminal and said data stream gateway in respect of said audiovisual session for a predetermined duration.
said contents profile server (55) comprises means for evaluating an adaptation of quality, that can be supported by said audiovisual session, of the audiovisual content transmitted as a function of said information recovered in response to said evaluation command and means for sending a response to said controller.

17. Computer program product downloadable from a communication network and/or stored on a support readable by computer and/or executable by a microprocessor, **characterized in that** it comprises program code instructions for the execution of the method according to Claims 1 to 6.
